(19) Europäisches Patentamt / European Patent Office / Office européen des brevets

(11) **EP 2 039 655 A1**

(12) **EUROPEAN PATENT APPLICATION**
published in accordance with Art. 153(4) EPC

(43) Date of publication:
**25.03.2009 Bulletin 2009/13**

(51) Int Cl.:
*C01F 11/02* (2006.01)     *B01D 53/28* (2006.01)
*B01D 53/86* (2006.01)     *B01J 20/04* (2006.01)

(21) Application number: **07744655.7**

(22) Date of filing: **04.06.2007**

(86) International application number:
**PCT/JP2007/061295**

(87) International publication number:
**WO 2007/142192 (13.12.2007 Gazette 2007/50)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **02.06.2006 JP 2006155291**
**02.06.2006 JP 2006155292**

(71) Applicants:
• **National University Corporation Tohoku Unversity**
  **Sendai Miyagi 980-8577 (JP)**
• **Taiyo Nippon Sanso Corporation**
  **Shinagawa-ku**
  **Tokyo 142-8558 (JP)**
• **Ube Material Industries, Ltd.**
  **Ube-shi,**
  **Yamaguchi 755-8510 (JP)**

(72) Inventors:
• **OHMI, Tadahiro**
  **Sendai-shi, Miyagi 980-8577 (JP)**
• **ISHIHARA, Yoshio**
  **Tokyo 142-8558 (JP)**
• **SUZUKI, Katsumasa**
  **Tokyo 142-8558 (JP)**
• **SAKODA, Kaoru**
  **Tokyo 142-8558 (JP)**
• **MISUMI, Osamu**
  **Ube-shi, Yamaguchi 755-8510 (JP)**
• **WATANABE, Takayuki**
  **Ube-shi, Yamaguchi 755-8510 (JP)**

(74) Representative: **Albrecht, Thomas**
  **Kraus & Weisert**
  **Patent- und Rechtsanwälte**
  **Thomas-Wimmer-Ring 15**
  **80539 München (DE)**

(54) **POROUS CALCIUM OXIDE PARTICULATE AND POROUS CALCIUM HYDROXIDE PARTICULATE**

(57) Granular calcium oxide and calcium hydroxide which are highly reactive with a halide gas and its decomposition products and favorably employable for filling a gas-fixing unit (32) of an apparatus (3) for fixing a halide gas are, respectively, a granule of porous spherical calcium oxide particles, which has a BET specific surface area of 50 $m^2$/g or more and a total pore volume of pores having a diameter of 2-100 nm in the range of 0.40-0.70 mL/g and a granule of porous spherical calcium hydroxide particles which has a BET specific surface area of 20 $m^2$/g or more and a total pore volume of pores having a diameter of 2-100 nm in the range of 0.25-0.40 mL/g.

**FIG. 1**

**Description**

FIELD OF THE INVENTION

The present invention relates to a granular porous calcium oxide and a granular porous calcium hydroxide.

BACKGROUND OF THE INVENTION

Since calcium oxide (quick lime) and calcium hydroxide (slaked lime) are highly reactive with an acid, they are utilized as absorbents (chemical absorbents) for gaseous acids such as a hydrogen fluoride gas, a hydrogen chloride gas, a sulfur dioxide gas, and a carbon dioxide gas. Further, since calcium oxide is highly reactive to water, it is also employed as a moisture-absorbing material. Furthermore, calcium oxide and calcium hydroxide have been studied as materials for fixing halide gasses such as CxFy gas (e.g., $CF_4$, $C_5F_8$) and $SiF_4$ gas and their decomposition products. These halide gases are used in semiconductor device-manufacturing processes. In this specification, the expression of "used in semiconductor device-manufacturing processes" means "used in processes of selectively etching semiconductor materials, dielectric materials or electrically conductive materials of semiconductor substrates (herein "semiconductor substrates" include substrates of semiconductors, substrates composed of a base plate of dielectric material and films of semiconductor material formed on the base plate, and further structures comprising any of these substrates and one or more of a film of a dielectric material , a film of a semiconductor material and/or a film of an electrically conductive material formed thereon), processes of forming a CF films on the semiconductor substrate by CVD, or processes of cleaning unnecessary deposits formed on a chamber inner wall after the CVD process.

D1 (WO 2005/072852) discloses a method for treating gaseous halide contained in an exhaust gas derived from apparatuses or systems of manufacturing semiconductor devices which comprises the steps of processing the gaseous halide with plasma under reduced pressure to give excited gaseous halide and bringing the exited gaseous halide into contact, under reduced pressure, with granules (reactive-removing material) composed of calcium oxide, calcium hydroxide or their mixture which is filled in a cylindrical reactive vessel.

D2 (JP 2002-224565A) discloses a process for decomposing gaseous fluorocarbon which comprises bringing fluorocarbon into contact with a heated mixture of granular aluminium oxide and granular alkaline earth metal oxide (e.g., calcium oxide) or thermally decomposed alkaline earth metal compound (e.g., calcium hydroxide).

The highly reactive calcium oxide which is favorably employable as a moisture absorbent and an acidic gas-fixing material are disclosed in the below-mentioned documents.

D3 (JP 2006-21945A) discloses a highly reactive calcium oxide having a BET specific surface area of 30 $m^2$/g or more and a total pore volume of $1.0 \times 10^{-4}$ $dm^3$/g or more, which is produced by calcining calcium hydroxide having a specifically defined BET specific surface area under calcining conditions in which the calcining temperature, calcining period and calcining atmosphere are specified. D3 describes that it is important to increase BET specific surface area and total pore volume of the calcium oxide in consideration of its hydrolysis and reactivity with acidic gases. The largest BET specific surface area and largest total pore volume of calcium oxide described in working examples of D3 are 56.2 $m^2$/g and $0.18 \times 10^{-4}$ $dm^3$/g (0.018 mL/g), respectively.

D4 (JP 7-149580A) discloses a porous calcium oxide which is produced by calcining granules prepared by granulating a powdery calcium hydroxide having a particle size of 300 $\mu$m or less under such conditions that the calcining temperature elevates from 390°C to 480°C for a period of at least 5 minutes at an ambient pressure. D4 contains a working example in which a granular porous calcium oxide having a cylindrical form (diameter: 3 mm, length: 3 mm) and a BET specific surface area of more than 50 $m^2$/g. However, D4 is silent with respect to a pore volume.

A highly reactive calcium hydroxide which is favorably employable as an acidic gas fixing agent is described the below-mentioned documents.

D5 (JP 2002-516247A) discloses a granular calcium hydroxide having a large BET specific surface area and a large pore volume comprising cylindrical porous calcium hydroxide particles which is produced by an extruding procedure using a binder. A working example of D3 describes a granular cylindrical calcium hydroxide having a BET specific surface area of 34 $m^2$/g (maximum value) and a total pore volume of 0.240 mL/g (i.e., total pore volume of pores having a diameter of 2-100 nm).

D6 (JP 2005-350343A) discloses a powdery calcium hydroxide having a BET specific surface area of 30 $m^2$/g or more and a total pore volume of 0.30 mL/g (i.e., total pore volume of pores having a diameter of 2-100 nm).

OBJECT OF THE INVENTION

As is described in D1 and D2, it is preferred that calcium oxide or calcium hydroxide to be filled into a cylindrical reaction vessel for fixing a gaseous material are in the form of granules so that the gaseous material can flow smoothly in the cylindrical reaction vessel.

Accordingly, it is the object of the present invention to provide a granular calcium oxide and a granular calcium hydroxide which are favorably employable in a cylindrical reaction vessel and which are highly reactive with a halide gas or its decomposition products.

## SUMMARY OF THE INVENTION

The present inventors have discovered that a granular porous calcium oxide prepared by the below-mentioned process has a BET specific surface area of 50 $m^2$/g or more and a total pore volume of pores having a diameter of 2 to 100 nm is such large as a volume in the range of 0.40 to 0.70 mL/g (the pores are contained in whole porous particles):

the process comprising the steps of:

mixing a calcium hydroxide powder having a BET specific surface area of 30 $m^2$/g or more with water to give a high water content calcium hydroxide powder having a water content in the range of 35 to 55 wt.%;
rotating the high water content calcium hydroxide powder to bring the powder into contact with each other, whereby producing an aggregated spherical water-containing calcium hydroxide having a water content in the range of 28 to 50 wt.%;
drying the water-containing calcium hydroxide at a temperature of 100 to 250°C for 5 hours or more, whereby producing a dry granular calcium hydroxide having a water content of not more than 0.5 wt.%; and
calcining the dry granular calcium hydroxide at a temperature of 315 to 500°C and at a pressure of not higher than 300 Pa, whereby producing the granular porous calcium oxide.

Further, the inventors have discovered that a granular porous calcium oxide prepared by the below-mentioned process also has a large BET specific surface and a large total pore volume of pores at levels mentioned above:

the process comprising the steps of:

bringing a powdery or granular calcium oxide into contact with a slaking water in an amount as much as 1.5 to 5 times by weight a theoretical amount required for slaking the calcium oxide under stirring, the slaking water containing a water-soluble compound selected from the group consisting of an oxycarboxylic acid, an oxycarboxylic acid salt, a saccharide, a sugar alcohol, a monohydric alcohol, a polyhydric alcohol, a primary amine, a secondary amine, an alcohol amine, succinic acid, a metal succinate and a ligninsulfonic acid salt, whereby slaking the calcium oxide to give a low water content calcium hydroxide powder having a water content in the range of 5 to 33 wt.%;
adding water to the low water content calcium hydroxide powder under stirring to give a high water content calcium hydroxide powder having a water content in the range of 35 to 55 wt.%;
rotating the high water content calcium hydroxide powder to bring the powder into contact with each other, whereby producing an aggregated spherical water-containing calcium hydroxide having a water content in the range of 28 to 50 wt.%;
drying the water-containing calcium hydroxide at a temperature in the range of 100 to 250°C for 5 hours or more, whereby producing a dry granular calcium hydroxide having a water content of not more than 0.5 wt.%; and
calcining the dry granular calcium hydroxide at a temperature of 315 to 500°C at a pressure of not higher than 300 Pa, whereby producing the granular porous calcium oxide.

Furthermore, the inventors have confirmed that the granular porous calcium oxide prepared having a BET specific surface area of 50 $m^2$/g or more and a total pore volume of pores having a diameter in the range of 2 to 100 nm is such large as a volume in the range of 0.40 to 0.70 mL/g, the pores being contained in a whole of the porous particles has a prominent ability for fixing a halide gas and their decomposition products thereto.
Furthermore, the inventors have discovered that a granular porous calcium hydroxide prepared by the below-mentioned process has a BET specific surface area of 20 $m^2$/g or more and a total pore volume of pores having a diameter in the range of 2 to 100 nm is in the range of 0.25 to 0.40 mL/g (which is larger than the corresponding total pore volume provided by the conventional granular calcium hydroxide), the pores being contained in a whole of the porous particles:

the process comprising the steps of:

mixing a calcium hydroxide powder having a BET specific surface area of 30 $m^2$/g or more with water to give a high water content calcium hydroxide powder having a water content in the range of 35 to 55 wt.%;

rotating the high water content calcium hydroxide powder to bring the powder into contact with each other, whereby producing aggregated spherical water-containing calcium hydroxide; and

drying the aggregated water-containing calcium hydroxide.

Furthermore, the inventors have discovered that a granular porous calcium hydroxide prepared by the below-mentioned process also has a large BET specific surface and a large total pore volume of pores at levels mentioned above:

the process comprising the steps of:

bringing a powdery or granular calcium oxide into contact with a slaking water in an amount as much as 1.5 to 5 times by weight a theoretical amount required for slaking the calcium oxide under stirring, the slaking water containing a water-soluble compound selected from the group consisting of an oxycarboxylic acid, an oxycarboxylic acid salt, a saccharide, a sugar alcohol, a monohydric alcohol, a polyhydric alcohol, a primary amine, a secondary amine, an alcohol amine, succinic acid, a metal succinate and a ligninsulfonic acid salt, whereby slaking the calcium oxide to give a low water content calcium hydroxide powder having a water content in the range of 5 to 33 wt.%;

adding water to the low water content calcium hydroxide powder under stirring to give a high water content calcium hydroxide powder having a water content in the range of 35 to 55 wt.%;

rotating the high water content calcium hydroxide powder to bring the powder into contact with each other, whereby producing aggregated spherical water-containing calcium hydroxide; and

drying the aggregated water-containing calcium hydroxide.

Accordingly, the present invention resides in a granular porous calcium oxide comprising aggregated porous spherical calcium oxide particles, which has a BET specific surface area of 50 m$^2$/g or more and a total pore volume of pores having a diameter of 2 to 100 nm is in the range of 0.40 to 0.70 mL/g, the pores being contained in whole porous particles.

Preferred embodiments of the granular porous calcium oxide of the invention are described below:

(1) The total pore volume of pores having a diameter of 2 to 100 nm is in the range of 0.40 to 0.60 mL/g.

(2) The maximum pore diameter is 30 nm or more.

(3) The maximum pore diameter is in the range of 30 to 100 nm.

(4) The BET specific surface area is in the range of 50 to 120 m$^2$/g.

(5) The BET specific surface area is in the range of 60 to 90 m$^2$/g.

(6) An amount of particles having a diameter of 1 mm or less is less than 5 wt.% and an amount of particles having a diameter of 10 mm or more is less than 5 wt.%.

(7) Calcium hydroxide is contained in an amount of 10 wt.% or less.

The invention further resides in a process for preparing the above-mentioned granular porous calcium oxide of the invention, which comprises the steps of:

mixing a calcium hydroxide powder having a BET specific surface area of 30 m$^2$/g or more with water to give a high water content calcium hydroxide powder having a water content in the range of 35 to 55 wt.%;

rotating the high water content calcium hydroxide powder to bring the powder into contact with each other, whereby producing an aggregated spherical water-containing calcium hydroxide having a water content in the range of 28 to 50 wt.%;

drying the water-containing calcium hydroxide at a temperature in the range of 100 to 250°C for 5 hours or more, whereby producing a dry granular calcium hydroxide having a water content of not more than 0.5 wt.%; and

calcining the dry granular calcium hydroxide at a temperature of 315 to 500°C and at a pressure of not higher than 300 Pa, whereby producing the granular porous calcium oxide.

The invention further resides in a process for preparing the above-mentioned granular porous calcium oxide of the invention, which comprises the steps of:

bringing a powdery or granular calcium oxide into contact with a slaking water in an amount as much as 1.5 to 5 times by weight a theoretical amount required for slaking the calcium oxide under stirring, the slaking water containing a water-soluble compound selected from the group consisting of an oxycarboxylic acid, an oxycarboxylic acid salt, a saccharide, a sugar alcohol, a monohydric alcohol, a polyhydric alcohol, a primary amine, a secondary amine, an alcohol amine, succinic acid, a metal succinate and a ligninsulfonic acid salt, whereby slaking the calcium oxide to give a low water content calcium hydroxide powder having a water content in the range of 5 to 33 wt.%;
adding water to the low water content calcium hydroxide powder under stirring to give a high water content calcium hydroxide powder having a water content in the range of 35 to 55 wt.%;
rotating the high water content calcium hydroxide powder to bring the powder into contact with each other, whereby producing an aggregated spherical water-containing calcium hydroxide having a water content in the range of 28 to 50 wt.%;
drying the water-containing calcium hydroxide at a temperature in the range of 100 to 250°C for 5 hours or more, whereby producing a dry granular calcium hydroxide having a water content of not more than 0.5 wt.%; and
calcining the dry granular calcium hydroxide at a temperature of 315 to 500°C and at a pressure of not higher than 300 Pa, whereby producing the granular porous calcium oxide.

The invention furthermore resides in fixing material comprising granular calcium oxide for fixing a halide gas or decomposition products of the halide gas thereto, the granular calcium oxide comprising aggregated porous spherical calcium oxide particles and having a BET specific surface area of 50 $m^2$/g or more and a total pore volume of pores having a diameter of 2 to 100 nm is in the range of 0.40 to 0.70 mL/g, the pores being contained in a whole of the porous particles.

Preferred embodiments of the fixing materials for fixing a halide gas or its decomposition products are described below.

(1) The total pore volume of pores having a diameter of 2 to 100 nm is in the range of 0.40 to 0.60 mL/g.
(2) The maximum pore diameter is 30 nm or more.
(3) The maximum pore diameter is in the range of 30 to 100 nm.
(4) The BET specific surface area is in the range of 50 to 120 $m^2$/g.
(5) The BET specific surface area is in the range of 60 to 90 $m^2$/g.
(6) An amount of particles having a diameter of 1 mm or less is less than 5 wt.% and an amount of particles having a diameter of 10 mm or more is less than 5 wt.%.
(7) Calcium hydroxide is contained in an amount of 10 wt.% or less.
(8) The fixing material shows a ratio of 60 molar % or more for contributing to a reaction with the halide gas or decomposition products thereof.

The invention furthermore resides in a cylindrical reaction vessel for fixing a halide gas or decomposition products thereof which is filled with the above-mentioned granular porous calcium oxide of the invention, which shows a utilization efficiency of the granular porous calcium oxide in a ratio of 30 molar % or more when a halide gas or decomposition products thereof are processed for fixing.

The invention furthermore resides in a method for fixing a halide gas or decomposition products thereof, which comprises a step of bringing the halide gas or decomposition products thereof into contact with a granular porous calcium oxide comprising aggregated porous spherical calcium oxide particles, which has a BET specific surface area of 50 $m^2$/g or more and a total pore volume of pores having a diameter of 2 to 100 nm is in the range of 0.40 to 0.70 mL/g, the pores being contained in whole porous particles under reduced pressure.

Preferred embodiments of the method for fixing a halide gas or decomposition products thereof according to the invention are described below:

(1) The granular porous calcium oxide has a maximum pore diameter of 30 nm or more.
(2) The granular porous calcium oxide contains calcium hydroxide in an amount of 10 wt.% or less.

The invention furthermore resides in a method for fixing an exhaust gas produced in a semiconductor device-manufacturing apparatus, which comprises a step of bringing a halide gas having been used in the semiconductor device-manufacturing processes or decomposition products thereof into contact with a granular porous calcium oxide filled into a cylindrical reaction vessel, under reduced pressure, the granular porous calcium oxide comprising aggregated porous spherical calcium oxide particles and having a BET specific surface area of 50 $m^2$/g or more and a total pore volume of pores having a diameter of 2 to 100 nm is in the range of 0.40 to 0.70 mL/g, the pores being contained in whole porous particles.

The invention furthermore resides in a process for manufacturing a semiconductor device which comprises the steps of:

processing a semiconductor substrate with a halide gas; and
fixing an exhaust gas derived from the halide gas having been used for the processing of bringing the exhaust gas into contact with a granular porous calcium oxide filled into a cylindrical reaction vessel under reduced pressure, the granular porous calcium oxide comprising aggregated porous spherical calcium oxide particles and having a BET specific surface area of 50 $m^2/g$ or more and a total pore volume of pores having a diameter of 2 to 100 nm is in the range of 0.40 to 0.70 mL/g, the pores being contained in whole porous particles.

The invention furthermore resides in a granular porous calcium hydroxide comprising aggregated porous spherical calcium hydroxide particles, which has a BET specific surface area of 20 $m^2/g$ or more and a total pore volume of pores having a diameter of 2 to 100 nm is in the range of 0.25 to 0.40 mL/g, the pores being contained in whole porous particles.

Preferred embodiments of the granular porous calcium hydroxide of the invention are described below:

(1) The total pore volume of pores having a diameter of 2 to 100 nm is in the range of 0.25 to 0.35 mL/g.
(2) An amount of particles having a diameter of 1 mm or less is less than 5 wt.% and an amount of particles having a diameter of 10 mm or more is less than 5 wt.%.
(3) The BET specific surface area is in the range of 20 to 55 $m^2/g$.

The invention furthermore resides in a process for preparing the above-mentioned granular porous calcium hydroxide of the invention, which comprises the steps of:

mixing a calcium hydroxide powder having a BET specific surface area of 30 $m^2/g$ or more with water to give a high water content calcium hydroxide powder having a water content in the range of 35 to 55 wt.%;
rotating the high water content calcium hydroxide powder to bring the powder into contact with each other, whereby producing an aggregated spherical water-containing calcium hydroxide; and
drying the aggregated water-containing calcium hydroxide.

The invention furthermore resides in a process for preparing the aforementioned granular porous calcium hydroxide of the invention, which comprises the steps of:

bringing a powdery or granular calcium oxide into contact with a slaking water in an amount as much as 1.5 to 5 times by weight a theoretical amount required for slaking the calcium oxide under stirring, the slaking water containing a water-soluble compound selected from the group consisting of an oxycarboxylic acid, an oxycarboxylic acid salt, a saccharide, a sugar alcohol, a monohydric alcohol, a polyhydric alcohol, a primary amine, a secondary amine, an alcohol amine, succinic acid, a metal succinate and a ligninsulfonic acid salt, whereby slaking the calcium oxide to give a low water content calcium hydroxide powder having a water content in the range of 5 to 33 wt.%;
adding water to the low water content calcium hydroxide powder under stirring to give a high water content calcium hydroxide powder having a water content in the range of 35 to 55 wt.%;
rotating the high water content calcium hydroxide powder to bring the powder into contact with each other, whereby producing an aggregated spherical water-containing calcium hydroxide; and
drying the aggregated water-containing calcium hydroxide.

EFFECTS OF THE INVENTION

The granular porous calcium oxide and granular porous calcium hydroxide according to the invention show a high reactivity particularly with various gases such as halide gases and their decomposition products. Therefore, the granular porous calcium oxide and granular porous calcium hydroxide according to the invention are of great value as materials for fixing halide gases and their decomposition products.

Further, the method for fixing halide gases and their decomposition products according to the invention is valuable in industry for fixing and removing halide gases and their decomposition products contained in gases exhausted from semiconductor device-manufacturing apparatuses.

Furthermore, the preparation processes of the invention enable industrially advantageous provision of a granular porous calcium oxide and a granular porous calcium hydroxide which are highly reactive with various gases such as halide gases and their decomposition products.

PREFERRED EMBODIMENTS OF THE INVENTION

The granular porous calcium oxide of the invention are in the form aggregated porous spherical calcium oxide particles. A particle in the aggregated porous spherical calcium oxide particles is formed of spherically aggregated micro particles (primary particles) of calcium oxide.

The granular porous calcium oxide of the invention has a BET specific surface area of 50 $m^2/g$ or more,

preferably in the range of 50 to 120 m$^2$/g, more preferably in the range of 60 to 90 m$^2$/g.

The granular porous calcium oxide of the invention has a total pore volume of pores having a diameter of 2 to 100 nm is in the range of 0.40 to 0.70 mL/g, preferably in the range of 0.40 to 0.60 mL. The pores are contained in whole porous particles. The total pore volume in the specification means a pore volume obtained by the known BJH method from a nitrogen gas-desorption isotherm.

The granular porous calcium oxide of the invention preferably has a maximum pore diameter of 30 nm or more, more preferably in the range of 30 to 100 nm, most preferably in the range of 40 to 80 nm. In the specification, the maximum pore diameter means a mode size of pores measured by a mercury-pressing method and is a diameter of a pore having a maximum pore volume which is indicated by dv (log d). If the maximum pore diameter is too small, it is difficult for the gas to be processed to enter the inside of the porous particles constituting the granules, resulting in decrease of the capacity for the target gas. If the maximum pore diameter is too large, the mechanical strength of the particles constituting the granules likely decreases, resulting in disintegration of the granules when the granules are filled into a cylindrical reaction vessel for fixing gases such as a halide gas and the gas-absorbing procedure is performed. In such case, the granules likely cannot keep their appropriate grain sizes and the conductance of the cylindrical reaction vessel decreases. Particularly, in the case that the halide gas is excited by plasma, granules having too large maximum pore diameter cannot keep their particle skeletons, likely causing pressure loss in the reaction vessel and disturbing the plasma discharge.

The granular porous calcium oxide of the invention preferably has a powderization ratio of not more than 2.0 wt.%, more preferably not more than 1.5 wt.%, more preferably not more than 1.0 wt.%, most preferably not more than 0.4 wt.%. In the specification, the powderization ratio means a percentage by weight of particles having passed through a sieve having an aperture of 250 μm which is measured by placing granular porous calcium oxide on the sieve and vibrating the sieve for 10 minutes at a frequency of 50 times/sec and an amplitude of 1 mm. The powderization ratio is an index to indicate easiness of disintegration when porous particles are transferred or filled into a cylindrical reaction vessel (i.e., column). Therefore, the granular porous calcium oxide to be filled into a column preferably has a small powderization ratio.

The granular porous calcium oxide of the invention may contain calcium carbonate and/or calcium hydroxide under such conditions their contents do not exceed 20 wt.%, particularly do not exceed 10 wt.%.

The granular porous calcium oxide of the invention preferably gives a pore size distribution (obtainable by the BJH from a desorption isotherm measured using a nitrogen gas) having splitting two peaks in the regions of a diameter range of 2 to 9 nm and a diameter range of 10 to 100 nm. In more detail, it is preferred that at least one peak is observed on a pore size distribution curve Ds (log d) in terms of a specific surface area which is obtained by the BJH method within the diameter range of 2 to 9 nm and the diameter range of 10 to 100 nm.

The pores in the diameter range of 2 to 9 nm correspond to pores present on the surfaces or inside of the micro particles constituting the porous particles. Accordingly, if the specific surface area of a total of the pores having a pore size in the diameter range of 2 to 9 nm is large, the micro particles constituting the porous particles show a higher gas absorbing capacity. The specific surface area of a total of the pores having a pore size in the diameter range of 2 to 9 nm preferably is in the range of 20 to 100 m$^2$/g, more preferably 30 to 85 m$^2$/g.

The pores in the diameter range of 10 to 100 nm correspond to pores formed between the adjacently positioned micro particles constituting the porous particles. Therefore, if the pore volume of the pores in the diameter range of 10 to 100 nm is large, the gas to be absorbed easily enter the spaces between the adjacent micro particles and the gas absorbing capacity increases. The total pore volume of the pores having a diameter range of 10 to 100 nm is preferably in the range of 0.10 to 0.60 mL/g, more preferably in the range of 0.20 to 0.55 mL, most preferably in the range of 0.35 to 0.55 mL/g.

The granular porous calcium oxide of the invention preferably shows a ratio of 60 molar % or more for contributing to a reaction with a halide gas or decomposition products thereof when it is used for fixing the halide gas or its decomposition products. In the specification, the ratio for contributing the reaction means a molar percentage of calcium converted into a calcium halide by the contact with a halide gas or its decomposition products per the total calcium in the granular porous calcium oxide.

In addition, the cylindrical reaction vessel filled with the granular porous calcium oxide of the invention preferably shows a utilization efficiency of the granular porous calcium oxide in a ratio of 30 molar % or more when a halide gas or decomposition products thereof are processed for fixing. In the specification, the utilization efficiency means a molar percentage of calcium converted into a calcium halide when the granular porous calcium oxide is brought into contact with the halide gas or its decomposition products, per a total calcium in the granular porous calcium oxide.

The granular porous calcium oxide of the invention can be prepared by a process comprising the steps of:

mixing a calcium hydroxide powder having a BET specific surface area of 30 m$^2$/g or more with water to give a high water content calcium hydroxide powder having a water content in the range of 35 to 55 wt.%;
rotating the high water content calcium hydroxide powder to bring the powder into contact with each other, whereby producing an aggregated spherical water-containing calcium hydroxide having a water content in the range of 28 to 50 wt.%;

drying the water-containing calcium hydroxide at a temperature in the range of 100 to 250°C for 5 hours or more, whereby producing a dry granular calcium hydroxide having a water content of not more than 0.5 wt.%; and

calcining the dry granular calcium hydroxide at a temperature of 315 to 500°C and at a pressure of not higher than 300 Pa, whereby producing the granular porous calcium oxide.

The calcium hydroxide powder used as the starting material for the above-mentioned preparation of the granular porous calcium oxide preferably has a BET specific surface area in the range of 30 to 65 $m^2/g$, more preferably 30 to 60 $m^2/g$. In addition, the calcium hydroxide powder preferably has a total pore volume of pores having a diameter of 2 to 100 nm is in the range of 0.25 to 0.50 mL/g, the pores being contained in whole porous particles.

The calcium hydroxide powder having a BET specific surface area of 30 $m^2/g$ or more can be prepared by the below-described processes (1) to (3).

(1) A process comprising the steps of bringing a powdery or granular calcium oxide into contact with a slaking water in an amount as much as 1.5 to 5 times by weight a theoretical amount required for slaking the calcium oxide under stirring, the slaking water containing a water-soluble compound selected from the group consisting of an oxycarboxylic acid, an oxycarboxylic acid salt, a saccharide, a sugar alcohol, a monohydric alcohol, a polyhydric alcohol, a primary amine, a secondary amine, an alcohol amine, succinic acid, a metal succinate and a ligninsulfonic acid salt, whereby slaking the calcium oxide to give a low water content calcium hydroxide powder having a water content in the range of 5 to 33 wt.%; adding water to the low water content calcium hydroxide powder under stirring to give a high water content calcium hydroxide powder having a water content in the range of 35 to 55 wt.%; and drying the high water content calcium hydroxide.

The above-mentioned process is described in the aforementioned D6 (JP 2005-350343A).

(2) A process comprising the steps of bringing a powdery or granular calcium oxide into contact with a slaking water in an amount as much as 3.2 or more times by weight a theoretical amount required for slaking the calcium oxide under stirring, the slaking water containing a water-soluble compound selected from the group consisting of an oxycarboxylic acid, an oxycarboxylic acid salt, a saccharide, a sugar alcohol, a monohydric alcohol, a polyhydric alcohol, a primary amine, a secondary amine, an alcohol amine, succinic acid, a metal succinate and a ligninsulfonic acid salt, whereby slaking the calcium oxide to give a high water content calcium hydroxide powder having a water content in the range of 35 to 55 wt.%; and drying the high water content calcium hydroxide.

The above-mentioned process is described in the aforementioned D6 (JP 2005-350343A).

(3) A process comprising the steps of bringing a powdery or granular calcium oxide into contact with a slaking water in an amount as much as 1.5 or more times by weight a theoretical amount required for slaking the calcium oxide under stirring, the slaking water containing diethylene glycol in an amount of 0.8 to 3 wt.% per the amount of calcium hydroxide to be produced, to give a low-containing calcium hydroxide powder having a water content in the range of 5 to 30 wt.%; and drying the low water content calcium hydroxide.

The above-mentioned process is described in the aforementioned JP 2003-300725A).

The high water content calcium hydroxide powder can be the high water content calcium hydroxide produced in the above-mentioned process (1) as the intermediate. In other words, the high water content calcium hydroxide powder can be prepared by a process comprising the steps of bringing a powdery or granular calcium oxide into contact with a slaking water in an amount as much as 1.5 to 5 times by weight a theoretical amount required for slaking the calcium oxide under stirring, the slaking water containing a water-soluble compound selected from the group consisting of an oxycarboxylic acid, an oxycarboxylic acid salt, a saccharide, a sugar alcohol, a monohydric alcohol, a polyhydric alcohol, a primary amine, a secondary amine, an alcohol amine, succinic acid, a metal succinate and a ligninsulfonic acid salt, whereby slaking the calcium oxide to give a low water content calcium hydroxide powder having a water content in the range of 5 to 33 wt.%; and adding water to the low water content calcium hydroxide powder under stirring to give a high water content calcium hydroxide powder having a water content in the range of 35 to 55 wt.%.

In the processes for the preparation of a high water content calcium hydroxide powder, the water soluble compound preferably is a sugar alcohol or a polyhydric alcohol. More preferred are sorbitol and diethylene glycol. The amount of the water soluble compound in the slaking water is generally in a range of 0.1 to 20 wt.%, preferably in a range of 0.1 to 10 wt.%, more preferably in a range of 0.1 to 5.0 wt.%, based on the amount of calcium hydroxide produced by slaking the calcium oxide in the case that the water soluble compound is sorbitol or diethylene glycol.

In the process of the invention for preparing the granular porous calcium oxide, the above-mentioned high water content calcium hydroxide powder is so rotated as to bring the powder into contact with each other, whereby producing an aggregated spherical water-containing calcium hydroxide (an aggregate of water-containing spherical porous particles) having a water content in the range of 28 to 50 wt.%. The procedure for aggregating particles by bringing the particles into contact with each other under rotation can be performed by means of tumbling granulation or agitation granulation. In the water-containing porous particles prepared by these granulation methods, the spaces between the calcium hydroxide micro particles are larger than the corresponding spaces of the porous particles prepared by extrusion.

The powdery or granular calcium oxide employed as the starting material preferably has an activity (measured for 50 g of calcium oxide using 4N hydrochloric acid by a grain titration method which is defined in Reference Test Method by Japan Lime Society) of 200 mL (measured at 5 min.) or more.

The granulation of the high water content calcium hydroxide powder is preferably performed under heating the calcium hydroxide powder to a temperature of 100 to 200°C. If the granulation of the high water content calcium hydroxide powder is performed under heating, the grain growth of the calcium hydroxide micro particles increases and the calcium hydroxide micro particles (primary particle) are more strongly combined to each other, so that the resulting water-containing porous particles can acquire increased strength.

The granular water-containing calcium hydroxide prepared in the above-mentioned granulation procedure is then dried for a period of 5 hours or more, until the water content decreases to 0.5 wt.% or less. The drying temperature generally is in the range of 100 to 250°C, preferably in the range of 120 to 200°C. The granular water-containing calcium hydroxide is preferably dried in a closed oven dryer with degassing the inner atmosphere of the dryer, so that calcium hydroxide can be prevented from carbonization. When the pressure in the dryer is adjusted by degassing, the period for decreasing the water content of the water-containing calcium hydroxide to reach 0.5 wt.% or less can be controlled. The pressure in the oven dryer is generally set to a range from an atmospheric pressure to $0.1 \times 10^5$ Pa.

The granular water-containing calcium hydroxide is preferably dried to have the water content of 0.5 wt.% or less within a period of 10 to 30 hours, more preferably within a period of 20 to 30 hours. If a longer drying period is adopted, the powderization ratio of the finally resulting granular calcium oxide decreases and hence production of a micro powder is minimized.

The dried granular calcium hydroxide obtained in the above-mentioned drying procedure has a BET specific surface area of generally 20 $m^2/g$ or more, preferably 20 to 55 $m^2/g$, more preferably 20 to 50 $m^2/g$. The dried granular calcium hydroxide has a total pore volume of pores having a diameter of 2 to 100 nm is generally in the range of 0.25 to 0.40 mL/g, preferably in the range of 0.25 to 0.35 mL/g.

In the preparation of the granular porous calcium oxide of the invention, the above-mentioned dried calcium hydroxide is calcined generally at a temperature of 315-500°C, preferably at a temperature of 330-450°C and at a pressure of generally 300 Pa or less, preferably 1-200 Pa, more preferably 1-150 Pa, to prepare the granular porous calcium oxide. The period of calcination can be adjusted in consideration of the calcination temperature, but generally is in the range of 30 minutes to 30 hours.

The granular porous calcium oxide of the invention can be utilized advantageously for fixing moisture, acidic gases, halide gases, and their decomposition products. Examples of the acidic gases include hydrogen fluoride gas, hydrogen chloride gas, sulfur dioxide gas and carbon dioxide gas. Examples of the halide gases include hydrocarbons in which a portion or all of the hydrogens are replaced with halogens (particularly, fluorine and bromine) and their decomposition products. Specifically, fluorocarbon gas (including perfluorocarbon gas) and halon gas can be mentioned.

The granular porous calcium oxide of the invention can be employed in the form of a mixture with a fluorocarbon gas-decomposition catalyst for fixing a fluorocarbon gas (including perfluorocarbon gas). Examples of the fluorocarbon gas-decomposition catalyst include aluminum oxide and an alumina catalyst composed of 80% of aluminum oxide and 20% of nickel oxide ($NiO_2$). It is preferred that the fluorocarbon gas-decomposition catalyst can decompose the fluorocarbon gas at a temperature of 300-1,000°C, particularly 700-1,000°C, in the presence of vaporized water. The fluorocarbon gas-decomposition catalyst preferably comprises granular porous material. The catalyst and the granular porous calcium oxide of the invention can be combined in a weight ratio of 10:90 to 90:10.

The granular porous calcium oxide of the invention can be advantageously filled in a cylindrical reaction vessel (column). The column filled with the granular porous calcium oxide of the invention can be placed in the passage of the gas to be processed.

The granular porous calcium oxide of the invention can be adjusted in its size (size of granule) in consideration with its use. When the granular porous calcium oxide is used in a column, the granular porous calcium oxide preferably has a size distribution in which a content of particles having a size of 1 mm or less is less than 5 wt.% (particularly, 1 wt.% or less) and a content of particles having a size of 10 mm or more is less than 5 wt.% (particularly, 1 wt.% or less).

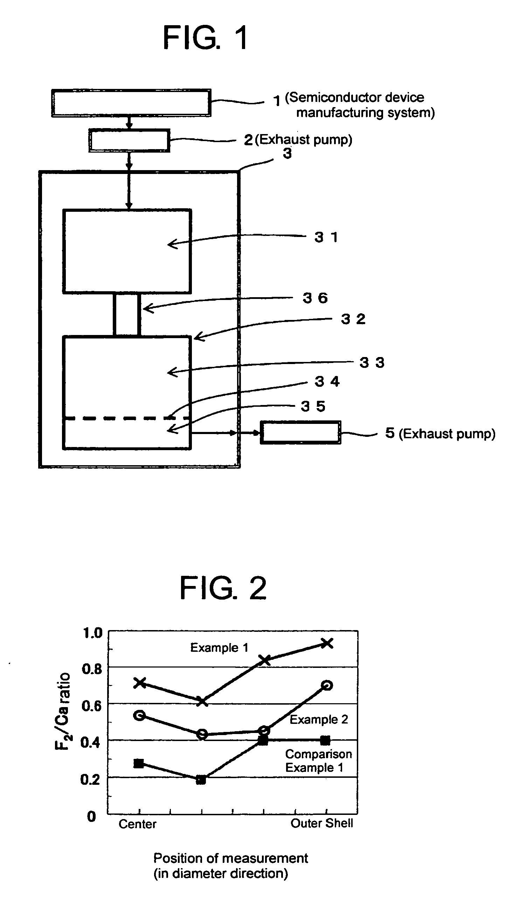

Fig. 1 illustrates one system of a halide gas-fixing system in which the granular porous calcium oxide of the invention is placed as a fixing material.

In Fig. 1, the halide gas-fixing apparatus 3 is composed of a pre-treatment unit 31 and a gas-fixing unit 32 which is connected to the pre-treatment unit 31 via a pipe 36. In the pre-treatment unit 31, the halide gas is excited to increase its reactivity with calcium oxide or the halide gas is decomposed and converted into decomposition products having a high reactivity with calcium oxide. The excitation of halide gas can be performed by plasma treatment. The decomposition of halide gas to give the highly reactive decomposition products can be performed by hydrolysis, combustion decomposition, oxidation decomposition, pyrolysis or catalytic decomposition. In the gas-fixing unit 32, the halide gas or its decomposition products are brought into contact with the granular porous calcium oxide, whereby the halide gas or its decomposition products react with the granular porous calcium oxide and are fixed.

In Fig. 1, the gas-fixing unit 32 is a cylindrical vessel having a porous plate 34 placed therein and the granular porous calcium oxide 33 placed on the porous plate 34. To the space 35 between the bottom of the gas-fixing unit 32 and the porous plate 34 is attached an evacuating pump 5. When the halide gas is treated for fixing, the gas in the gas-fixing unit 32 is preferably evacuated by means of the evacuating pump 5 so that the pressure in the gas-fixing unit 32 can be kept in a range of 100 Pa to an atmospheric pressure. There are no other limitations on the processing conditions in the pre-treatment unit 31 and gas-fixing unit 32, so far as the effects provided by the invention are not disturbed.

In Fig. 1, the halide gas used in the semiconductor device-manufacturing apparatus 1 for selectively etching semiconductor substrates (as is described hereinbefore, "semiconductor substrates" include substrates of semiconductors, substrates composed of a base plate of dielectric material and a film of semiconductor material, and further structures comprising one or more of these substrate and a dielectric material coat, a semiconductor material coat and/or an electroconductive material coat) to form a CF film on a semiconductor substrate by CVD processing, or cleaning deposits produced on a chamber inner wall after the CVD processing is exhausted from the semiconductor device-manufacturing apparatus 1 by means of the exhaust pump 2. The gas exhausted from the etching process may contain a halide gas such as CxFy gas (e.g., $CF_4$, $C_5F_8$) and its decomposition products and $SiF_4$ gas derived from the etched material (e.g., Si and $SiO_2$). In the case that the CVD process is performed, the exhaust gas may contain a CxFy gas (e.g., $C_5F_8$) having been used for the CVD processing and its decomposition product gases such as $C_2F_4$, $C_2F_6$, $C_3F_8$) . In the case that the plasma cleaning is performed for cleaning a CF film deposited on the chamber inner wall by means of oxygen plasma, the exhausted gas may contain $CF_3$ gas, $CF_4$ gas, $COF_2$ gas, and the like.

The gas exhausted from the semiconductor device-manufacturing apparatus 1 is sent to the halide gas-fixing apparatus 3. In the halide gas-fixing apparatus 3, the exhaust gas is excited or decomposed in the pre-treatment unit 31 and subsequently sent to the gas-fixing unit 32 through the pipe 36. In the gas-fixing unit 32, the excited halide gas or the decomposition products are brought into contact with the granular porous calcium oxide under reduced pressure and removed by fixation. The gas from which the halide gas or its decomposition products are removed is then passed through the space 35 and exhausted to air by means of an evacuating (or exhaust) pump 5.

The granular porous calcium hydroxide of the invention is described below.

The granular porous calcium hydroxide of the invention is in the form aggregated porous spherical calcium hydroxide particles. The porous calcium hydroxide comprises a spherical aggregate of calcium hydroxide micro particles (primary particles). The granular porous calcium hydroxide of the invention has a BET specific surface area of 20 $m^2$/g or more, preferably in the range of 20 to 55 $m^2$/g, more preferably in the range of 20 to 50 $m^2$/g and a total pore volume of pores having a diameter of 2 to 100 nm is in the range of 0.25 to 0.40 mL/g, preferably in the range of 0.25 to 0.35 mL/g, in which the pores are contained in a whole of the porous particles.

Thus, the granular porous calcium hydroxide of the invention can be employed for the preparation of the granular porous calcium oxide of the invention as the dry granular calcium hydroxide to be subjected to calcination.

The granular porous calcium hydroxide of the invention preferably has a powderization ratio of not more than 2.0 wt.%, more preferably not more than 1.0 wt.%, more preferably not more than 0.4 wt.%, most preferably not more than 0.2 wt.%.

The granular porous calcium hydroxide of the invention may contain calcium carbonate and/or calcium oxide, so far as their contents do not exceed 20 wt.%, particularly do not exceed 10 wt.%.

The granular porous calcium hydroxide of the invention preferably gives a pore size distribution (obtained by the BJH from a desorption isotherm measured using a nitrogen gas) having splitting two peaks in the regions of a diameter range of 2 to 9 nm and a diameter range of 10 to 100 nm. In more detail, it is preferred that at least one peak is observed on a pore size distribution curve Ds (log d) in terms of a specific surface area which is obtained by the BJH method within the diameter range of 2 to 9 nm and the diameter range of 10 to 100 nm.

The pores in the diameter range of 2 to 9 nm correspond to pores present on the surfaces or inside of the micro particles constituting the porous particles. Accordingly, if the specific surface area of a total of the pores having a pore size in the diameter range of 2 to 9 nm is large, the micro particles constituting the porous particles show a higher gas absorbing capacity. The specific surface area of a total of the pores having a pore size in the diameter range of 2 to 9 nm preferably is in the range of 5 to 25 $m^2$/g, more preferably 10 to 25 $m^2$/g.

The pores in the diameter range of 10 to 100 nm correspond to pores formed between the adjacently positioned micro particles constituting the porous particles. Therefore, if the pore volume of the pores in the diameter range of 10 to 100 nm is large, the gas to be absorbed easily enter the spaces between the adjacent micro particles and the gas absorbing capacity increases. The total pore volume of the pores having a diameter range of 10 to 100 nm is preferably in the range of 0.20 to 0.35 mL/g, more preferably in the range of 0.25 to 0.35 mL/g.

The high water content calcium hydroxide powder having a water content of 35 to 55 wt.% which is used for the preparation of the granular porous calcium hydroxide of the invention can be prepared by mixing a calcium hydroxide powder having a BET specific surface area of 30 m$^2$/g or more with water. The calcium hydroxide powder preferably has a BET specific surface area in the range of 30 to 65 m$^2$/g, more preferably 30 to 60 m$^2$/g. Moreover, the calcium hydroxide powder preferably has a total pore volume of pores having a diameter of 2 to 100 nm in the range of 0.25 to 0.50 mL/g.

The high water content calcium hydroxide powder can be prepared by bringing a powdery or granular calcium oxide into contact with a slaking water in an amount as much as 1.5 to 5 times by weight a theoretical amount required for slaking the calcium oxide under stirring, the slaking water containing a water-soluble compound selected from the group consisting of an oxycarboxylic acid, an oxycarboxylic acid salt, a saccharide, a sugar alcohol, a monohydric alcohol, a polyhydric alcohol, a primary amine, a secondary amine, an alcohol amine, succinic acid, a metal succinate and a ligninsulfonic acid salt, whereby slaking the calcium oxide to give a low water content calcium hydroxide powder having a water content in the range of 5 to 33 wt.%; adding water to the low water content calcium hydroxide powder under stirring to give a high water content calcium hydroxide powder having a water content in the range of 35 to 55 wt.%.

In the processes for the preparation of a high water content calcium hydroxide powder, the water soluble compound preferably is a sugar alcohol or a polyhydric alcohol. More preferred are sorbitol and diethylene glycol. The amount of the water soluble compound in the slaking water is generally in a range of 0.1 to 20 wt.%, preferably in a range of 0.1 to 10 wt.%, more preferably in a range of 0.1 to 5.0 wt.%, based on the amount of calcium hydroxide produced by slaking the calcium oxide in the case that the water soluble compound is sorbitol or diethylene glycol.

The powdery or granular calcium oxide employed as the starting material preferably has an activity (measured for 50 g of calcium oxide using 4N hydrochloric acid by a grain titration method which is defined in Reference Test Method by Japan Lime Society) of 200 mL (measured at 5 min.) or more.

In the process of the invention for preparing the granular porous calcium hydroxide, the above-mentioned high water content calcium hydroxide powder is so rotated as to bring the powder into contact with each other, whereby producing an aggregated spherical water-containing calcium hydroxide (an aggregate of water-containing spherical porous particles) having a water content in the range of 28 to 50 wt.%. The procedure for aggregating particles by bringing the particles into contact with each other under rotation can be performed by tumbling granulation or agitation granulation.

The granulation of the high water content calcium hydroxide powder is preferably performed under heating the calcium hydroxide powder to a temperature of 100 to 200°C. If the granulation of the high water content calcium hydroxide powder is performed under heating, the grain growth of the calcium hydroxide micro particles increases and the calcium hydroxide micro particles (primary particle) are more strongly combined to each other, so that the resulting water-containing porous particles can acquire increased strength.

The granular water-containing calcium hydroxide prepared in the above-mentioned granulation procedure is then dried at a temperature in the range of 100 to 250°C, preferably in the range of 120 to 200°C. The granular water-containing calcium hydroxide is preferably dried in a closed oven dryer with degassing the inner atmosphere of the dryer, so that calcium hydroxide can be prevented from carbonization. If the pressure in the dryer is adjusted by degassing, the period for drying the water content of the water-containing calcium hydroxide can be controlled. The pressure in the oven dryer is generally set to an atmospheric pressure to 0.1x10$^5$ Pa.

The granular porous calcium hydroxide of the invention can be utilized advantageously for fixing moisture, acidic gases, halide gases, and their decomposition products, as is described hereinbefore for the granular porous calcium oxide of the invention.

The granular porous calcium hydroxide of the invention can be employed in the form of a mixture with a fluorocarbon gas decomposition catalyst for fixing a fluorocarbon gas (including perfluorocarbon gas).

The granular porous calcium hydroxide of the invention can be adjusted in its size (size of granule) in consideration with its use. When the granular porous calcium hydroxide is used in a column, the granular porous calcium hydroxide has a size distribution in which a content of particles having a size of 1 mm or less is less than 5 wt.% (particularly, 1 wt.% or less) and a content of particles having a size of 10 mm or more is less than 5 wt.% (particularly, 1 wt.% or less).

EXAMPLES

In the following examples, the water content, BET specific surface area, total pore specific surface area, total pore volume, maximum pore diameter and powderization ratio were determined by the below-given methods.

[Determination of water content]

The object is placed in a vacuum tray dryer and dried at 180°C for 90 minutes and at a pressure of 50 Pa. The weight loss by drying is measured and introduced into the following equation:

$$Water\ content\ (wt.\%)\ =$$
$$100\ \times\ loss(g)\ by\ drying/weight(g)\ of\ the\ object.$$

[Determination of BET specific surface area]

BET specific surface area is measured at five points by means of Full Automatic Gas Adsorption Measuring Apparatus (Autosorb-3B, available from Quantachrome).

[Determination of pore distribution, pore specific surface area and pore volume]

The pore distribution is determined from a pore size distribution curve Ds (log d) obtainable from specific surface area which is calculated from a desorption isotherm by the BJH method. The pore specific surface area is determined from an accumulated pore specific surface area curve which is obtained from a desorption isotherm by the BJH method. The desorption isotherm is obtained by a nitrogen gas-adsorption method using Full Automatic Gas Adsorption Measuring Apparatus (Autosorb-3B, available from Quantachrome).

[Determination of maximum pore diameter]

The maximum pore diameter is determined by the mercury porosimetry using Full Automatic Pore Size Distribution Measuring Apparatus (PoreMater 60-GT, available from Quantachrome).

[Determination of powderization ratio (after 10 min.)]

The object is precisely weighed to give a sample of 60 g. The sample is placed on a circular standard sieve having an aperture size of 250 $\mu$m and a diameter of 75 mm. The sieve is vibrated using a magnetic vibrator (A-3PRO, available from FRITSCH Co., Ltd.) for 10 minutes under the conditions that the amplitude is 1 mm and the frequency is 50 times/sec. At the lapse of 10 minutes, the undersize particles having passed through the sieve are weighed and its weight is introduced into the below-given equation to obtain the powderization ratio (after 10 min.). The procedures for determination of powderization ratio are all performed in a glove box (adjusted to 25°C, 3% RH) purged with a nitrogen gas, so that the sample does not change in its weight due to reaction with water vapor and carbon dioxide gas.

$$Powderization\ ratio\ (after\ 10\ min.)\ =$$
$$100\ \times\ weight(g)\ of\ undersize\ particles/60(g)$$

[Example 1]

(1) Preparation of calcium oxide powder

Calcium oxide mass (calcined quick lime) having a particle size of 40-70 mm was pulverized to give a calcium oxide powder under the conditions that 75 wt.% of the powder would pass through a sieve (200 mesh) having an aperture size of 74 $\mu$m. Thus obtained calcium oxide powder showed an activity of 205 mL (5 min. activity) and an activity of 212 mL (10 min. activity). The activity was determined by the below-described method (Grain titration method defined in Reference Test Method by Japan Lime Society).

[Determination of activity]

Pure water (500 mL) warmed to 30°C is placed in a 2 L-volume vessel. A small amount of a phenolphthalein indicator was added to the water. The water is stirred at 350 rpm by means of a stirrer. 25 g of calcium oxide powder is precisely weighed to give a sample. The sample is added to the water with checking the time of addition. Subsequently, 4N hydrochloric acid is continuously dropped into the water keeping the color of the indicator from disappearance. The amount of hydrochloric acid dropped into the water within 5 minutes is measured to obtain the 5 min. activity, as well as the amount of hydrochloric acid dropped into the water within 10 minutes is measured to obtain the 10 min. activity.

(2) Preparation of high water content calcium hydroxide powder

A jacketed stirring mixer (effective volume: 75 L, high speed mixer, Proshear Mixer, available from Taiheiyou Machine Manufacturing Co., Ltd.) was heated to 110°C (temperature in the stirring mixer) by introducing steam heated to 110°C into the jacket. In the heated stirring mixer were placed 9 kg of the above-mentioned calcium oxide powder and 9.73 kg of a slaking water prepared by dissolving 1.8 wt.% of diethylene glycol in pure water. The amount of diethylene glycol corresponded to 1.5 wt.% based on the amount of the resulting calcium hydroxide. The calcium oxide powder and slaking water were stirred at 85 rpm for 5 minutes to obtain a low water content calcium hydroxide powder having a water content of 25 wt.%. Subsequently, 3.2 kg of pure water (secondary water) was placed in the stirring mixer, and the pure water and the low water content calcium hydroxide powder were stirred at 120 rpm for 5 minutes, to obtain a high water content calcium hydroxide powder having a water content of 37 wt.%.

(3) Preparation of granular water-containing calcium hydroxide

Following the above-mentioned procedure, the high water content calcium hydroxide powder was stirred at 180 rpm for 5 minutes to give a granular water-containing porous particles having a water content of 30 wt.%.

(4) Drying of granular water-containing calcium hydroxide (preparation of dry granular calcium hydroxide)

The granular water-containing calcium hydroxide obtained in (3) above was placed in a tray vacuum dryer and dried at 180°C for 24 hours with evacuating the dryer to keep the inner pressure at approx. $1.0 \times 10^5$ Pa, until the water content reached 0.5 wt.% or less. Thus obtained dry granular calcium hydroxide was classified on a circular vibrating sieve to adjust the particle size in the range of 2.0 to 5.6 mm.

(5) Calcination of dry granular calcium hydroxide (preparation of granular calcium oxide)

The dry granular calcium hydroxide prepared in (4) above was placed in a vacuum calcining furnace and calcined at 425°C for 14 hours after the inner pressure of the furnace was adjusted to 50 Pa by means of a vacuum pump and the furnace temperature (inside temperature) was increased to 425°C from the ambient temperature at a temperature elevation rate of 1.5°C/min. Subsequently, the furnace was allowed to cool to 250°C (inside temperature), and the calcined product was taken out after the inside pressure of the furnace was adjusted to the ambient temperature. In the calcining procedure, the inside of the furnace was evacuated by a vacuum pump so that the inside pressure would be kept at 150 Pa or less.

The calcined product was analyzed in its chemical composition by the X-ray diffraction method. The analysis confirmed that the calcined product was granular porous calcium oxide. The obtained granular porous calcium oxide had a BET specific surface area of 75.4 $m^2$/g, a total pore volume (total volume of pores having a pore size of 2-100 nm) of 0.560 mL/g, a maximum pore diameter of 58.8 nm, and a powderization ratio of 0.18 wt.%.

The granular porous calcium oxide was then subjected to determination of pore size distribution from a pore size distribution curve Ds (log d) based on specific surface area. It was confirmed that the pore size distribution curve of the granular product had a peak in the pore size range of 2-9 nm as well as the pore size range of 10-100 nm. The specific surface area of all pores in the pore range of 2-9 nm was 67.3 $m^2$/g, and the total pore volume of all pores in the pore range of 10-100 nm was 0.459 mL/g.

The granular porous calcium oxide (an average particle size was approx. 3 mm, containing 1 wt.% or less of particles having a particle size of 1 mm or less and 1 wt.% or less of particles having a particle size of 10 mm or more) obtained in the manner described above was filled into a gas-fixing unit 32 of the halide gas-fixing apparatus of Fig. 1 and subjected to a procedure for fixing $CF_4$ gas and its decomposition products. The pre-treatment unit 31 of the fixing apparatus was a commercially available radio frequency plasma generator comprising an alumina cylinder, a radio frequency coil coiled around the cylinder and a radio frequency electric source (frequency: 2 MHz). The plasma generator was activated at an output of 3.0 kW to generate an inductively coupled plasma within the cylinder. The gas-fixing unit 32 was a cylindrical reactive vessel (inner diameter: 150 mm, length: 600 mm, bottom closed) of stainless steel. In the gas-fixing unit 32 was filled 2 kg of the granular porous calcium oxide (height of the filled calcium oxide: 155 mm).

The procedure of fixing $CF_4$ gas and its decomposition products was carried out by continuously measuring the gases contained in the exhaust gas in the exhaust pump 5 by means of an infrared absorption spectrometer (FT-IR) arranged on the side of the exhaust pump 5 connected to the gas-fixing unit 32. The procedure of fixing $CF_4$ gas and its decomposition products was continued until hydrogen fluoride (HF) was detected in the exhaust gas by FT-IR (detection limit: 500 ppm).

In advance of initiating the procedure of fixing $CF_4$ gas and its decomposition products, a gaseous mixture of Ar gas, $O_2$ gas and $CF_4$ gas (Ar: 300 sccm, $O_2$: 150 sccm, $CF_4$: 50 sccm) was introduced into the pre-treatment unit 31 in which an inside pressure was kept at 0.4 kPa (3 torr). The filled granular porous calcium oxide was stable and did not corrupt during the gas-fixing procedure. The pressure loss produced in the gas-fixing unit 32 was so low as 0.2 kPa in the gas-fixing process. Therefore, the inside pressure in the pre-treatment unit 31 was kept stable, so that good plasma discharge was maintained. Thus, the granular porous calcium oxide of the invention was kept stable in its structure with little powderization and did not increase pressure loss in the gas-fixing unit 32, maintaining the good plasma discharge.

At a lapse of 47.4 hours from the initiation of the gas-fixing procedure, HF gas was detected in the exhaust gas in the exhaust pump 5. Assuming that the fluorine component of $CF_4$ gas and its decomposition products was fixed in the granular porous calcium oxide in the form of $CaF_2$, the utilization efficiency of the granular porous calcium oxide filled in the gas-fixing unit 32 was 35.1 molar %.

After termination of the gas-fixing procedure, one porous calcium oxide granule was sampled at a depth of 50 mm from the upper surface of the filled granular porous calcium oxide and analyzed on the section in its composition for Ca and F by means of EDX (energy-dispersive fluorescent X-ray analyzer). The results are illustrated in Fig. 2. As is clear from Fig. 2, the $F_2$/Ca ratio after the gas-fixing procedure was approx. 0.7 in the center area and approx. 0.9 in the vicinity of the outer shell. Accordingly, an average $F_2$/Ca ratio in whole granule was 0.86 and thus the ratio of contribution to the reaction was 86 molar %.

[Example 2]

The procedures of Example 1 were repeated to give a calcined product except that the procedure of Example 1(4) for drying the granular water-containing calcium hydroxide was performed at a temperature of 180°C and a pressure (inside of the dryer) of approx. $0.5 \times 10^5$ Pa for 8 hours so that the water content of the granular water-containing calcium hydroxide reached 0.5 wt.% or lower.

The calcined product was analyzed in its chemical composition by the X-ray diffraction method. The analysis confirmed that the calcined product was granular porous calcium oxide. The obtained granular porous calcium oxide had a BET specific surface area of 70.0 $m^2$/g, a total pore volume (total volume of pores having a pore size of 2-100 nm) of 0.567 mL/g, a maximum pore diameter of 37.1 nm, and a powderization ratio of 0.45 wt.%.

The granular porous calcium oxide was then subjected to determination of pore size distribution from a pore size distribution curve Ds (log d) based on specific surface area. It was confirmed that the pore size distribution curve of the granular product had a peak in the pore size range of 2-9 nm as well as the pore size range of 10-100 nm. The specific surface area of all pores in the pore range of 2-9 nm was 40.9 $m^2$/g, and the total pore volume of all pores in the pore range of 10-100 nm was 0.505 mL/g.

The granular porous calcium oxide (an average particle size was approx. 3 mm, containing 1 wt.% or less of particles having a particle size of 1 mm or less and 1 wt.% or less of particles having a particle size of 10 mm or more) obtained in the manner described above was filled into a gas-fixing unit 32 of the halide gas-fixing apparatus as is done in Example 1 and subjected to a procedure for fixing $CF_4$ gas and its decomposition products.

At a lapse of 40.8 hours from the initiation of the gas-fixing procedure, HF gas was detected in the exhaust gas in the exhaust pump 5. Assuming that the fluorine component of $CF_4$ gas and its decomposition products was fixed in the granular porous calcium oxide in the form of $CaF_2$, the utilization efficiency of the granular porous calcium oxide filled in the gas-fixing unit 32 was 30.3 molar %.

After termination of the gas-fixing procedure, one porous calcium oxide granule was sampled in the same manner as in Example 1 and analyzed on the section in its composition for Ca and F. The results are illustrated in Fig. 2. As is clear from Fig. 2, the $F_2$/Ca ratio after the gas-fixing procedure was approx. 0.5 in the center area and approx. 0.7 in the vicinity of the outer shell. Accordingly, an average $F_2$/Ca ratio in whole granule was 0.60 and thus the ratio of contribution to the reaction was 60 molar %.

[Comparison Example 1]

The procedures of Example 1 were repeated keeping the furnace pressure under 500 Pa to give a calcined product except that the procedure of Example 1(5) for calcining the dry granular calcium hydroxide was performed at a temperature of 550°C for 7 hours.

The calcined product was analyzed in its chemical composition by the X-ray diffraction method. The analysis confirmed that the calcined product was granular porous calcium oxide. The obtained granular porous calcium oxide had a BET specific surface area of 41.8 $m^2$/g, a total pore volume (total volume of pores having a pore size of 2-100 nm) of 0.344 mL/g, a maximum pore diameter of 45 nm, and a powderization ratio of 0.45 wt.%.

The granular porous calcium oxide was then subjected to determination of pore size distribution. It was confirmed that the pore size distribution curve of the granular product had a peak in the pore size range of 2-9 nm as well as the pore size range of 10-100 nm. The specific surface area of all pores in the pore range of 2-9 nm was 27.8 $m^2$/g, and the total pore volume of all pores in the pore range of 10-100 nm was 0.312 mL/g.

The granular porous calcium oxide (18 g, an average particle size was approx. 3 mm, containing 1 wt.% or less of particles having a particle size of 1 mm or less and 1 wt.% or less of particles having a particle size of 10 mm or more) was filled into a gas-fixing unit 32 of the gas-fixing apparatus to form a column having a height of 5 mm.

The procedure of fixing $CF_4$ gas and its decomposition products was carried out in the same manner as in Example 1, except that a gaseous mixture of Ar gas, $O_2$ gas and $CF_4$ gas (Ar: 264 sccm, $O_2$: 9 sccm, $CF_4$: 1.6 sccm) was introduced into the pre-treatment unit 31 in which an inside pressure was kept at 1 kPa.

The gas-fixing procedure was terminated when HF gas was detected in the exhaust gas in the exhaust pump 5.

After termination of the gas-fixing procedure, one porous calcium oxide granule was sampled from the upper surface of the filled granular porous calcium oxide and analyzed on the section in its composition for Ca and F. The results are illustrated in Fig. 2. As is clear from Fig. 2, the $F_2$/Ca ratio after the gas-fixing procedure was approx. 0.3 in the center area and approx. 0.4 in the vicinity of the outer shell. Accordingly, an average $F_2$/Ca ratio in whole granule was 0.36 and thus the ratio of contribution to the reaction was 36 molar %.

The BET specific surface area, total pore volume of the pores having a diameter of 2-100 nm, maximum pore diameter and ratio of contribution to reaction of the granular porous calcium oxides prepared in Examples 1 and 2 and Comparison Example 1 are set forth in the following Table 1.

Table 1

| | BET specific surface area (m²/g) | Total pore Volume (mL/g) | Maximum pore diameter (nm) | Ratio of Contribution (molar %) |
|---|---|---|---|---|
| Ex. 1 | 75.4 | 0.560 | 58.8 | 86 |
| Ex. 2 | 70.0 | 0.567 | 37.1 | 60 |
| Comp.1 | 41.8 | 0.344 | 45 | 36 |

Comparison between Examples 1 & 2 and Comparison Example 1 indicates that the increased BET specific surface area and total pore volume contribute to increase the ratio of contribution to reaction of the granular porous calcium oxide. Comparison between Examples 1 and 2 indicates that the increase of the ratio of contribution to reaction is larger than the increases of BET specific surface area and total pore volume. This is understood to be derived that the prominent increase of the maximum pore diameter (1.58 times: 58.8/37.1). Under a low pressure condition, the gas molecules have a longer mean free path and hardly reach the center area of the particle having a small pore diameter.

[Example 3]

The procedures of Example 1 were repeated to give a calcined product except that the procedure of Example 1(4) for drying the granular water-containing calcium hydroxide was performed for 72 hours.

The calcined product was analyzed in its chemical composition by the X-ray diffraction method. The analysis confirmed that the calcined product was granular porous calcium oxide. The obtained granular porous calcium oxide had a BET specific surface area of 108.5 m²/g, a total pore volume (total volume of pores having a pore size of 2-100 nm) of 0.415 mL/g, a maximum pore diameter of 70.5 nm, and a powderization ratio of 1.2 wt.%.

The granular porous calcium oxide was then subjected to determination of pore size distribution from a pore size distribution curve Ds (log d) based on specific surface area. It was confirmed that the pore size distribution curve of the granular product had a peak in the pore size range of 2-9 nm as well as the pore size range of 10-100 nm. The specific surface area of all pores in the pore range of 2-9 nm was 113.5 m²/g, and the total pore volume of all pores in the pore range of 10-100 nm was 0.297 mL/g.

The granular porous calcium oxide was filled into a gas-fixing unit 32 of the halide gas-fixing apparatus in the same manner as in Example 1 and subjected to a procedure for fixing $CF_4$ gas and its decomposition products. The pressure loss produced in the gas-fixing unit 32 was 0.4 kPa in the gas-fixing process. Although the pressure loss is relatively higher than that observed in Example 1, $CF_4$ gas was removed at almost the same level as observed in Example 1.

[Example 4]

The procedures of Example 2 were repeated to give a granular porous calcium oxide except that the procedure for calcining the dry granular calcium hydroxide was performed for 4 hours.

The obtained granular calcium oxide had a BET specific surface area of 78.0 m²/g, a total pore volume (total volume of pores having a pore size of 2-100 nm) of 0.558 mL/g and a powderization ratio of 0.14 wt.% and contained 4 wt.% of calcium hydroxide.

The granular porous calcium oxide was filled in the gas-fixing unit 32 of the halide gas fixing apparatus in the same manner as in Example 1, and the procedure for fixing $CF_4$ gas and its decomposition products was performed. From the beginning of the gas-fixing procedure, the water content of the exhaust gas in the exhaust pump 5 was measured by FT-IR.

At a lapse of 12 hours from the beginning of the gas-fixing procedure, water was detected in the exhaust gas in the exhaust pump 5. At a lapse of 30 hours, the content of water reached a stable value of 10 mL/min (1.0 vol.% in terms of water concentration in the exhaust gas). This water content corresponds to a dew point of 7°C, which does not cause dew condensation.

[Example 5]

The procedures of Example 1 were repeated to give a calcined product except that the procedure of Example 1(5) for calcining the dry granular calcium hydroxide was performed for 4.5 hours.

X-ray diffraction analysis of the calcined product indicated that the product was a granular porous calcium oxide. The granular porous calcium oxide had a BET specific surface area of 77.4 $m^2/g$, a total pore volume (total volume of pores having a pore size of 2-100 nm) of 0.557 mL/g and a powderization ratio of 0.15 wt.%.

The granular porous calcium oxide was then subjected to determination of pore size distribution from a pore size distribution curve Ds (log d) based on specific surface area. It was confirmed that the pore size distribution curve of the granular product had a peak in the pore size range of 2-9 nm as well as the pore size range of 10-100 nm. The specific surface area of all pores in the pore range of 2-9 nm was 72.8 $m^2/g$, and the total pore volume of all pores in the pore range of 10-100 nm was 0.456 mL/g.

[Example 6]

The procedures of Example 1 were repeated to give a calcined product except that the procedure of Example 1(4) for drying the granular water-containing calcium hydroxide was performed at a temperature of 180°C and a pressure (inside of the dryer) of approx. $0.5 \times 10^5$ Pa for 8 hours so that the water content of the granular water-containing calcium hydroxide reached 0.5 wt.% or less and that the dry granular calcium hydroxide was calcined for 4.5 hours.

The calcined product was analyzed in its chemical composition by the X-ray diffraction method. The analysis confirmed that the calcined product was granular porous calcium oxide. The obtained granular porous calcium oxide had a BET specific surface area of 79.0 $m^2/g$, a total pore volume (total volume of pores having a pore size of 2-100 nm) of 0.573 mL/g, and a powderization ratio of 0.62 wt.%.

The granular porous calcium oxide was then subjected to determination of pore size distribution from a pore size distribution curve Ds (log d) based on specific surface area. It was confirmed that the pore size distribution curve of the granular product had a peak in the pore size range of 2-9 nm as well as the pore size range of 10-100 nm. The specific surface area of all pores in the pore range of 2-9 nm was 54.5 $m^2/g$, and the total pore volume of all pores in the pore range of 10-100 nm was 0.500 mL/g.

[Example 7]

The granular water-containing calcium hydroxide obtained in the same manner as in Example 1(2) was placed in a tray vacuum dryer and dried at 180°C with evacuating the dryer to keep the inner pressure at approx. $0.5 \times 10^5$ Pa or lower, until the water content reached 0.5 wt.% or less. Thus obtained dry granular calcium hydroxide was pulverized to give a dry granular calcium hydroxide having a BET specific surface area of 38.5 $m^2/g$ and a total pore volume (of pores having a diameter of 2-100 nm) of 0.317 mL/g.

A jacketed stirring mixer (effective volume: 75 L) was heated to 110°C (temperature in the stirring mixer) by introducing steam heated to 110°C into the jacket. In the heated stirring mixer were placed 9 kg of the above-mentioned dry calcium hydroxide powder and 6 kg of pure water. The calcium oxide powder and pure water were stirred at 120 rpm for 5 minutes to obtain a high water content calcium hydroxide powder having a water content of 37 wt.%. Subsequently, the high water content calcium hydroxide powder was stirred at 180 rpm for 5 minutes, to obtain spherical water-containing porous particles. Thus obtained granular water-containing calcium hydroxide had a water content of 30 wt.%.

Thus obtained granular water-containing calcium hydroxide obtained was dried in the same manner as in Example 1 under the following conditions: the dryer inner pressure of at approx. $1.0 \times 10^5$ Pa, temperature of 180°C, period of 24 hours until the water content reached 0.5 wt.% or less, to give a dry granular calcium hydroxide. Thus obtained dry granular calcium hydroxide was classified and calcined at a temperature of 425°C and a pressure of 150 Pa or lower for a period of 14 hours.

The calcined product was analyzed in its chemical composition by the X-ray diffraction method. The analysis confirmed that the calcined product was granular porous calcium oxide. The obtained granular porous calcium oxide had a BET specific surface area of 72.3 $m^2/g$, a total pore volume (total volume of pores having a pore size of 2-100 nm) of 0.575 mL/g, and a powderization ratio of 0.08 wt.%.

The granular porous calcium oxide was then subjected to determination of pore size distribution from a pore size distribution curve Ds (log d) based on specific surface area. It was confirmed that the pore size distribution curve of the granular product had a peak in the pore size range of 2-9 nm as well as the pore size range of 10-100 nm. The specific surface area of all pores in the pore range of 2-9 nm was 67.3 $m^2/g$, and the total pore volume of all pores in the pore range of 10-100 nm was 0.475 mL/g.

[Example 8]

A jacketed stirring mixer (effective volume: 75 L) was heated to 110°C (temperature in the stirring mixer) by introducing steam heated to 110°C into the jacket. In the heated stirring mixer were placed 9 kg of the calcium oxide powder prepared in Example 1(1) and 8.67 kg of a slaking water prepared by dissolving 1.8 wt.% of diethylene glycol in pure water. The amount of diethylene glycol corresponded to 1.3 wt.% based on the amount of the resulting calcium hydroxide. The calcium oxide powder and slaking water were stirred at 85 rpm for 5 minutes to obtain a low water content calcium hydroxide powder having a water content of 20 wt.%. Subsequently, the low water content calcium hydroxide powder was placed in a vacuum dryer and dried at 180°C with evacuating the dryer to keep the inner pressure at approx. $0.5 \times 10^5$ Pa or lower, until the water content reached 0.5 wt.% or less. Thus obtained dry granular calcium hydroxide was classified to give a dry calcium hydroxide powder having a BET specific surface area of 47.0 $m^2/g$ and a total pore volume (total volume of pores having a pore size of 2-100 nm) of 0.276 mL/g.

A jacketed stirring mixer (effective volume: 75 L) was heated to 110°C (temperature in the stirring mixer) by introducing steam heated to 110°C into the jacket. In the heated stirring mixer were placed 9 kg of the above-mentioned dry calcium hydroxide powder and 6 kg of pure water. The calcium hydroxide powder and pure water were stirred at 120 rpm for 5 minutes to obtain a high water content calcium hydroxide powder having a water content of 37 wt.%. Subsequently, the high water content calcium hydroxide powder was stirred at 180 rpm for 5 minutes, to obtain spherical water-containing porous particles. Thus obtained granular water-containing calcium hydroxide had a water content of 31 wt.%.

Thus obtained granular water-containing calcium hydroxide obtained was dried in the same manner as in Example 1 under the following conditions: the dryer inner pressure of at approx. $1.0 \times 10^5$ Pa, temperature of 180°C, period of 24 hours until the water content reached 0.5 wt.% or less, to give a dry granular calcium hydroxide. Thus obtained dry granular calcium hydroxide was classified and calcined at a temperature of 425°C and a pressure of 150 Pa or lower for a period of 14 hours.

The calcined product was analyzed in its chemical composition by the X-ray diffraction method. The analysis confirmed that the calcined product was granular porous calcium oxide. The obtained granular porous calcium oxide had a BET specific surface area of 77.0 $m^2/g$, a total pore volume (total volume of pores having a pore size of 2-100 nm) of 0.537 mL/g, and a powderization ratio of 0.15 wt.%.

The granular porous calcium oxide was then subjected to determination of pore size distribution from a pore size distribution curve Ds (log d) based on specific surface area. It was confirmed that the pore size distribution curve of the granular product had a peak in the pore size range of 2-9 nm as well as the pore size range of 10-100 nm. The specific surface area of all pores in the pore range of 2-9 nm was 80.8 $m^2/g$, and the total pore volume of all pores in the pore range of 10-100 nm was 0.418 mL/g.

[Example 9]

The procedures of Example 6 were repeated to give a calcined product except that the procedure for drying the granular water-containing calcium hydroxide was performed at a pressure (inside of the dryer) of approx. $0.5 \times 10^5$ Pa for 8 hours so that the water content of the granular water-containing calcium hydroxide reached 0.5 wt.% or less.

The calcined product was analyzed in its chemical composition by the X-ray diffraction method. The analysis confirmed that the calcined product was granular porous calcium oxide. The obtained granular porous calcium oxide had a BET specific surface area of 76.8 $m^2/g$, a total pore volume (total volume of pores having a pore size of 2-100 nm) of 0.579 mL/g, and a powderization ratio of 0.78 wt.%.

The granular porous calcium oxide was then subjected to determination of pore size distribution from a pore size distribution curve Ds (log d) based on specific surface area. It was confirmed that the pore size distribution curve of the granular product had a peak in the pore size range of 2-9 nm as well as the pore size range of 10-100 nm. The specific surface area of all pores in the pore range of 2-9 nm was 47.6 $m^2/g$, and the total pore volume of all pores in the pore range of 10-100 nm was 0.512 mL/g.

The drying period for drying granular water-containing calcium hydroxide, BET specific surface area, total pore volume of the pores having a diameter of 2-100 nm, and powderization ratio the granular porous calcium oxides prepared in Examples 5 to 9 are set forth in the following Table 2.

Table 2

|       | Drying period (hrs.) | BET specific surface area ($m^2/g$) | Total pore Volume (mL/g) | Powderization ratio (wt.%) |
|-------|---------------------|-------------------------------------|--------------------------|----------------------------|
| Ex. 5 | 24                  | 77.4                                | 0.557                    | 0.15                       |
| Ex. 6 | 8                   | 79.0                                | 0.573                    | 0.62                       |
| Ex. 7 | 24                  | 72.3                                | 0.575                    | 0.08                       |
| Ex. 8 | 24                  | 77.0                                | 0.537                    | 0.15                       |
| Ex. 9 | 8                   | 76.8                                | 0.579                    | 0.78                       |

The results set forth in Table 2 indicate that all of the granular porous calcium oxides prepared in Examples 5 to 9 had a large BET specific surface area as well as a large total pore volume. Particularly, the granular porous calcium oxides prepared by drying the water-containing calcium hydroxide for 24 hours show a powderization ratio of less than 0.2 wt.%. Therefore, the powderization hardly occurs and they are advantageously used in filling in a cylindrical reaction vessel (column).

[Example 10]

Calcium oxide mass (calcined quick lime) having a particle size of 40-70 mm was pulverized to give a calcium oxide powder in which 75 wt.% of the powder passed through a sieve (200 mesh) having an aperture size of 74 $\mu$m. Thus obtained calcium oxide powder showed an activity of 205 mL (5 min. activity) and an activity of 212 mL (10 min. activity).

A jacketed stirring mixer (effective volume: 75 L, high speed mixer, Proshear Mixer, available from Taiheiyou Machine Manufacturing Co., Ltd.) was heated to 110°C (temperature in the stirring mixer) by introducing steam heated to 110°C into the jacket. In the heated stirring mixer were placed 9 kg of the above-mentioned calcium oxide powder and 9.73 kg of a slaking water prepared by dissolving 1.8 wt.% of diethylene glycol in pure water. The amount of diethylene glycol corresponded to 1.5 wt.% based on the amount of the resulting calcium hydroxide. The calcium oxide powder and slaking water were stirred at 85 rpm for 5 minutes to obtain a low water content calcium hydroxide powder having a water content of 25 wt.%. Subsequently, 3.2 kg of pure water (secondary water) was placed in the stirring mixer, and the pure water and the low water content calcium hydroxide powder were stirred at 120 rpm for 5 minutes, to obtain a high water content calcium hydroxide powder having a water content of 37 wt.%.

Following the above-mentioned procedure, the high water content calcium hydroxide powder was stirred at 180 rpm for 5 minutes to give a granular water-containing porous particles having a water content of 30 wt.%.

The above-mentioned granular water-containing calcium hydroxide was placed in a tray vacuum dryer and dried at 180°C with evacuating the dryer to keep the inner pressure at approx. $1.0 \times 10^5$ Pa for 24 hours, until the water content reached 0.5 wt.% or less. Thus obtained dry granular calcium hydroxide was classified on a circular vibrating sieve to adjust the particle size in the range of 2.0 to 5.6 mm.

The above-mentioned granular porous calcium hydroxide had a BET specific surface area of 28.7 $m^2/g$, a total pore volume (total volume of pores having a pore size of 2-100 nm) of 0.301 mL/g, and a powderization ratio of 0.07 wt.%.

The granular porous calcium hydroxide was then subjected to determination of pore size distribution from a pore size distribution curve Ds (log d) based on specific surface area. It was confirmed that the pore size distribution curve of the granular product had a peak in the pore size range of 2-9 nm as well as the pore size range of 10-100 nm. The specific surface area of all pores in the pore range of 2-9 nm was 13.0 $m^2/g$, and the total pore volume of all pores in the pore range of 10-100 nm was 0.286 mL/g.

[Example 11]

The high water content calcium hydroxide powder prepared in the same manner as in Example 10 was placed in a tray vacuum dryer and dried at 180°C with evacuating the dryer to keep the inner pressure at approx. $0.5 \times 10^5$ Pa or lower, until the water content reached 0.5 wt.% or less. Thus obtained dry calcium hydroxide powder was pulverized to give a dry granular calcium hydroxide powder having a BET specific surface area of 38.5 $m^2/g$ and a total pore volume (of pores having a diameter of 2-100) of 0.317 mL/g.

A jacketed stirring mixer (effective volume: 75 L) was heated to 110°C (temperature in the stirring mixer) by introducing steam heated to 110°C into the jacket. In the heated stirring mixer were placed 9 kg of the above-mentioned dry calcium hydroxide powder and 6 kg of pure water. The calcium hydroxide powder and pure water were stirred at 120 rpm for 5 minutes to obtain a high water content calcium hydroxide powder having a water content of 37 wt.%. Subsequently, the high water content calcium hydroxide powder was stirred at 180 rpm for 5 minutes, to obtain granular spherical water-containing calcium hydroxide. Thus obtained granular water-containing calcium hydroxide had a water content of 30 wt.%.

Thus obtained granular water-containing calcium hydroxide obtained was dried in the same manner as in Example 10 under the following conditions: the dryer inner pressure of at approx. $1.0 \times 10^5$ Pa, temperature of 180°C, period of 24 hours until the water content reached 0.5 wt.% or less, to give a dry granular calcium hydroxide. Thus obtained dry granular calcium hydroxide was classified to adjust the particle size in the range of 2.0 to 5.6 mm.

The obtained granular porous calcium hydroxide had a BET specific surface area of 29.6 $m^2$/g, a total pore volume (total volume of pores having a pore size of 2-100 nm) of 0.293 mL/g, and a powderization ratio of 0.08 wt.%.

The granular porous calcium hydroxide was then subjected to determination of pore size distribution from a pore size distribution curve Ds (log d) based on specific surface area. It was confirmed that the pore size distribution curve of the granular product had a peak in the pore size range of 2-9 nm as well as the pore size range of 10-100 nm. The specific surface area of all pores in the pore range of 2-9 nm was 17.5 $m^2$/g, and the total pore volume of all pores in the pore range of 10-100 nm was 0.274 mL/g.

[Example 12]

A jacketed stirring mixer (effective volume: 75 L) was heated to 110°C (temperature in the stirring mixer) by introducing steam heated to 110°C into the jacket. In the heated stirring mixer were placed 9 kg of the calcium oxide powder prepared in Example 10 and 8.67 kg of a slaking water prepared by dissolving 1.8 wt.% of diethylene glycol in pure water. The amount of diethylene glycol corresponded to 1.3 wt.% based on the amount of the resulting calcium hydroxide. The calcium oxide powder and slaking water were stirred at 85 rpm for 5 minutes to obtain a low water content calcium hydroxide powder having a water content of 20 wt.%. Subsequently, the low water content calcium hydroxide powder was placed in a vacuum dryer and dried at 180°C with evacuating the dryer to keep the inner pressure at approx. $0.5 \times 10^5$ Pa or lower, until the water content reached 0.5 wt.% or less, and pulverized. Thus obtained dry calcium hydroxide powder had a BET specific surface area of 47.0 $m^2$/g and a total pore volume (total volume of pores having a pore size of 2-100 nm) of 0.276 mL/g.

A jacketed stirring mixer (effective volume: 75 L) was heated to 110°C (temperature in the stirring mixer) by introducing steam heated to 110°C into the jacket. In the heated stirring mixer were placed 9 kg of the dry calcium hydroxide powder and 6 kg of pure water. The calcium hydroxide powder and pure water were stirred at 120 rpm for 5 minutes to obtain a high water content calcium hydroxide powder having a water content of 37 wt.%. Subsequently, the high water content calcium hydroxide powder was stirred at 180 rpm for 5 minutes, to obtain spherical water-containing porous particles. Thus obtained granular water-containing calcium hydroxide had a water content of 31 wt.%.

Thus obtained granular water-containing calcium hydroxide obtained was dried in the same manner as in Example 10 under the following conditions: the dryer inner pressure of at approx. $1.0 \times 10^5$ Pa, temperature of 180°C, period of 24 hours until the water content reached 0.5 wt.% or less. Thus obtained dry granular calcium hydroxide was classified to adjust the particle size in the range of 2.0 to 5.6 mm.

The obtained granular porous calcium hydroxide had a BET specific surface area of 23.5 $m^2$/g, a total pore volume (total volume of pores having a pore size of 2-100 nm) of 0.260 mL/g, and a powderization ratio of 0.07 wt.%.

The granular porous calcium hydroxide was then subjected to determination of pore size distribution from a pore size distribution curve Ds (log d) based on specific surface area. It was confirmed that the pore size distribution curve of the granular product had a peak in the pore size range of 2-9 nm as well as the pore size range of 10-100 nm. The specific surface area of all pores in the pore range of 2-9 nm was 15.5 $m^2$/g, and the total pore volume of all pores in the pore range of 10-100 nm was 0.244 mL/g.

[Example 13]

The procedures of Example 10 were repeated to give a granular porous calcium hydroxide except that the procedure for drying the granular water-containing calcium hydroxide was performed at a pressure (inside of the dryer) of approx. $0.5 \times 10^5$ Pa for 8 hours so that the water content of the granular water-containing calcium hydroxide reached 0.5 wt.% or less.

The obtained granular porous calcium hydroxide had a BET specific surface area of 46.6 $m^2$/g, a total pore volume (total volume of pores having a pore size of 2-100 nm) of 0.316 mL/g, and a powderization ratio of 0.20 wt.%.

The granular porous calcium hydroxide was then subjected to determination of pore size distribution from a pore size distribution curve Ds (log d) based on specific surface area. It was confirmed that the pore size distribution curve of the granular product had a peak in the pore size range of 2-9 nm as well as the pore size range of 10-100 nm. The specific surface area of all pores in the pore range of 2-9 nm was 18.7 $m^2$/g, and the total pore volume of all pores in the pore range of 10-100 nm was 0.289 mL/g.

[Example 14]

The procedures of Example 11 were repeated to give a granular porous calcium hydroxide except that the procedure for drying the granular water-containing calcium hydroxide was performed at a pressure (inside of the dryer) of approx. $0.5 \times 10^5$ Pa for 8 hours so that the water content of the granular water-containing calcium hydroxide reached 0.5 wt.% or less.

The obtained granular porous calcium hydroxide had a BET specific surface area of 41.2 $m^2/g$, a total pore volume (total volume of pores having a pore size of 2-100 nm) of 0.296 mL/g, and a powderization ratio of 0.05 wt.%.

The granular porous calcium hydroxide was then subjected to determination of pore size distribution from a pore size distribution curve Ds (log d) based on specific surface area. It was confirmed that the pore size distribution curve of the granular product had a peak in the pore size range of 2-9 nm as well as the pore size range of 10-100 nm. The specific surface area of all pores in the pore range of 2-9 nm was 14.5 $m^2/g$, and the total pore volume of all pores in the pore range of 10-100 nm was 0.276 mL/g.

[Example 15]

The procedures of Example 12 were repeated to give a granular porous calcium hydroxide except that the procedure for drying the granular water-containing calcium hydroxide was performed at a pressure (inside of the dryer) of approx. $0.5 \times 10^5$ Pa for 8 hours so that the water content of the granular water-containing calcium hydroxide reached 0.5 wt.% or less.

The obtained granular porous calcium hydroxide had a BET specific surface area of 42.8 $m^2/g$, a total pore volume (total volume of pores having a pore size of 2-100 nm) of 0.313 mL/g, and a powderization ratio of 0.05 wt.%.

The granular porous calcium hydroxide was then subjected to determination of pore size distribution from a pore size distribution curve Ds (log d) based on specific surface area. It was confirmed that the pore size distribution curve of the granular product had a peak in the pore size range of 2-9 nm as well as the pore size range of 10-100 nm. The specific surface area of all pores in the pore range of 2-9 nm was 18.6 $m^2/g$, and the total pore volume of all pores in the pore range of 10-100 nm was 0.288 mL/g.

The BET specific surface area, total pore volume of the pores having a diameter of 2-100 nm, and powderization ratio of the granular porous calcium hydroxides prepared in Examples 10 to 15 are set forth in the following Table 3.

Table 3

|  | BET specific surface area ($m^2/g$) | Total pore Volume (mL/g) | Powderization ratio (wt.%) |
|---|---|---|---|
| Ex. 10 | 28.7 | 0.301 | 0.07 |
| Ex. 11 | 29.6 | 0.293 | 0.08 |
| Ex. 12 | 23.5 | 0.260 | 0.07 |
| Ex. 13 | 46.6 | 0.316 | 0.20 |
| Ex. 14 | 41.2 | 0.296 | 0.05 |
| Ex. 15 | 42.8 | 0.313 | 0.05 |

The results set forth in Table 3 indicate that all of the granular porous calcium hydroxides prepared in Examples 10 to 15 had a large BET specific surface area as well as a large total pore volume. Moreover, the powderization hardly occurs.

BRIEF DESCRIPTION OF DRAWING

FIG. 1 illustrates a halide gas-fixing apparatus in which a granular porous calcium oxide of the invention is filled.

Fig. 2 is a graph showing results of the $Ca/F_2$ composition analysis on the granular porous calcium oxides having been subjected to the halide gas fixation in the halide-gas fixing apparatus performed in Examples 1 and 2 and Comparison Example 1. The measurement was performed at every 1/4 position of the radius of the granule.

1: Semiconductor device-manufacturing system

2:      Exhaust pump
3:      Halide gas-fixing apparatus
5:      Exhaust pump (Evacuation pump)
31:     Pre-treatment unit
32:     Gas-fixing unit
33:     Granular porous calcium oxide
34:     Porous plate
35:     Space
36:     Pipe

**Claims**

1.  A granular porous calcium oxide comprising an aggregated porous spherical calcium oxide particles, which has a BET specific surface area of 50 $m^2$/g or more and a total pore volume of pores having a diameter of 2 to 100 nm is in the range of 0.40 to 0.70 mL/g, the pores being contained in whole porous particles.

2.  The granular porous calcium oxide of claim 1, in which the total pore volume of pores having a diameter of 2 to 100 nm is in the range of 0.40 to 0.60 mL/g.

3.  The granular porous calcium oxide of claim 1, which has a maximum pore diameter of 30 nm or more.

4.  The granular porous calcium oxide of claim 1, which has a maximum pore diameter in the range of 30 to 100 nm.

5.  The granular porous calcium oxide of claim 1, in which the BET specific surface area is in the range of 50 to 120 $m^2$/g.

6.  The granular porous calcium oxide of claim 1, in which the BET specific surface area is in the range of 60 to 90 $m^2$/g.

7.  The granular porous calcium oxide of claim 1, in which an amount of particles having a diameter of 1 mm or less is less than 5 wt.% and an amount of particles having a diameter of 10 mm or more is less than 5 wt.%.

8.  The granular porous calcium oxide of claim 1, which contains calcium hydroxide in an amount of 10 wt.% or less.

9.  A process for preparing the granular porous calcium oxide of claim 1, which comprises the steps of:

    mixing a calcium hydroxide powder having a BET specific surface area of 30 $m^2$/g or more with water to give a high water content calcium hydroxide powder having a water content in the range of 35 to 55 wt.%;
    rotating the high water content calcium hydroxide powder to bring the powder into contact with each other, whereby producing an aggregated spherical water-containing calcium hydroxide having a water content in the range of 28 to 50 wt.%;
    drying the water-containing calcium hydroxide at a temperature of 100 to 250°C for 5 hours or more, whereby producing a dry granular calcium hydroxide having a water content of not more than 0.5 wt.%; and
    calcining the dry granular calcium hydroxide at a temperature of 315 to 500°C and at a pressure of not higher than 300 Pa, whereby producing the granular porous calcium oxide.

10. A process for preparing the granular porous calcium oxide of claim 1, which comprises the steps of:

    bringing a powdery or granular calcium oxide into contact with a slaking water in an amount as much as 1.5 to 5 times by weight a theoretical amount required for slaking the calcium oxide under stirring, the slaking water containing a water-soluble compound selected from the group consisting of an oxycarboxylic acid, an oxycarboxylic acid salt, a saccharide, a sugar alcohol, a monohydric alcohol, a polyhydric alcohol, a primary amine, a secondary amine, an alcohol amine, succinic acid, a metal succinate and a ligninsulfonic acid salt, whereby slaking the calcium oxide to give a low water content calcium hydroxide powder having a water content in the range of 5 to 33 wt.%;
    adding water to the low water content calcium hydroxide powder under stirring to give a high water content calcium hydroxide powder having a water content in the range of 35 to 55 wt.%;
    rotating the high water content calcium hydroxide powder to bring the powder into contact with each other, whereby producing an aggregated spherical water-containing calcium hydroxide having a water content in the range of 28 to 50 wt.%;

drying the water-containing calcium hydroxide at a temperature of 100 to 250°C for 5 hours or more, whereby producing a dry granular calcium hydroxide having a water content of not more than 0.5 wt.%; and

calcining the dry granular calcium hydroxide at a temperature of 315 to 500°C and at a pressure of not higher than 300 Pa, whereby producing the granular porous calcium oxide.

11. Fixing material comprising granular calcium oxide for fixing a halide gas or decomposition products of the halide gas thereto, the granular calcium oxide comprising an aggregated porous spherical calcium oxide particles and having a BET specific surface area of 50 $m^2$/g or more and a total pore volume of pores having a diameter of 2 to 100 nm is in the range of 0.40 to 0.70 mL/g, the pores being contained in whole porous particles.

12. The fixing material of claim 11, in which the total pore volume of pores having a diameter of 2 to 100 nm is in the range of 0.40 to 0.60 mL/g.

13. The fixing material of claim 11, which has a maximum pore diameter of 30 nm or more.

14. The fixing material of claim 11, which has a maximum pore diameter in the range of 30 to 100 nm.

15. The fixing material of claim 11, in which the BET specific surface area is in the range of 50 to 120 $m^2$/g.

16. The fixing material of claim 11, in which the BET specific surface area is in the range of 60 to 90 $m^2$/g.

17. The fixing material of claim 11, in which an amount of particles having a diameter of 1 mm or less is less than 5 wt. % and an amount of particles having a diameter of 10 mm or more is less than 5 wt.%.

18. The fixing material of claim 11, which contains calcium hydroxide in an amount of 10 wt.% or less.

19. The fixing material of claim 11, which shows a ratio of 60 molar % or more for contributing to a reaction with the halide gas or decomposition products thereof.

20. A cylindrical reaction vessel for fixing a halide gas or a decomposition product thereof which is filled with the granular porous calcium oxide of claim 1, which shows a utilization efficiency of the granular porous calcium oxide in a ratio of 30 molar % or more when a halide gas or decomposition products thereof is processed for fixing.

21. A method for fixing a halide gas or decomposition products thereof, which comprises a step of bringing the halide gas or decomposition products thereof into contact with a granular porous calcium oxide comprising an aggregated porous spherical calcium oxide particles, which has a BET specific surface area of 50 $m^2$/g or more and a total pore volume of pores having a diameter of 2 to 100 nm is in the range of 0.40 to 0.70 mL/g, the pores being contained in whole porous particles under reduced pressure.

22. The fixing method of claim 21, in which the granular porous calcium oxide has a maximum pore diameter of 30 nm or more.

23. The fixing method of claim 21, in which the granular porous calcium oxide contains calcium hydroxide in an amount of 10 wt.% or less.

24. A method for fixing an exhaust gas produced in a semiconductor manufacturing apparatus, which comprises a step of bringing a halide gas having been used in the semiconductor-device manufacturing apparatus or decomposition products thereof into contact with a granular porous calcium oxide filled into a cylindrical reaction vessel, under reduced pressure, the granular porous calcium oxide comprising an aggregated porous spherical calcium oxide particles and having a BET specific surface area of 50 $m^2$/g or more and a total pore volume of pores having a diameter of 2 to 100 nm is in the range of 0.40 to 0.70 mL/g, the pores being contained in whole porous particles.

25. A process for manufacturing a semiconductor device which comprises the steps of:

processing a semiconductor substrate with a halide gas; and

fixing an exhaust gas derived from the halide gas having been used for the processing of bringing the exhaust gas into contact with a granular porous calcium oxide filled into a cylindrical reaction vessel under reduced pressure, the granular porous calcium oxide comprising an aggregated porous spherical calcium oxide particles and having a BET specific surface area of 50 $m^2$/g or more and a total pore volume of pores having a diameter of 2 to 100 nm is in the range of 0.40 to 0.70 mL/g, the pores being contained in whole porous particles.

26. A granular porous calcium hydroxide comprising an aggregated porous spherical calcium hydroxide particles, which has a BET specific surface area of 20 $m^2$/g or more and a total pore volume of pores having a diameter of 2 to 100 nm is in the range of 0.25 to 0.40 mL/g, the pores being contained in whole porous particles.

27. The granular porous calcium hydroxide of claim 26, in which the total pore volume of pores having a diameter of 2 to 100 nm is in the range of 0.25 to 0.35 mL/g.

28. The granular porous calcium hydroxide of claim 26, in which an amount of particles having a diameter of 1 mm or less is less than 5 wt.% and an amount of particles having a diameter of 10 mm or more is less than 5 wt.%.

29. The granular porous calcium oxide of claim 26, in which the BET specific surface area is in the range of 20 to 55 $m^2$/g.

30. A process for preparing the granular porous calcium hydroxide of claim 26, which comprises the steps of:

mixing a calcium hydroxide powder having a BET specific surface area of 30 $m^2$/g or more with water to give a high water content calcium hydroxide powder having a water content in the range of 35 to 55 wt.%;
rotating the high water content calcium hydroxide powder to bring the powder into contact with each other, whereby producing aggregated spherical water-containing calcium hydroxide; and
drying the aggregated water-containing calcium hydroxide.

31. A process for preparing the granular porous calcium hydroxide of claim 26, which comprises the steps of:

bringing a powdery or granular calcium oxide into contact with a slaking water in an amount as much as 1.5 to 5 times by weight a theoretical amount required for slaking the calcium oxide under stirring, the slaking water containing a water-soluble compound selected from the group consisting of an oxycarboxylic acid, an oxycarboxylic acid salt, a saccharide, a sugar alcohol, a monohydric alcohol, a polyhydric alcohol, a primary amine, a secondary amine, an alcohol amine, succinic acid, a metal succinate and a ligninsulfonic acid salt, whereby slaking the calcium oxide to give a low water content calcium hydroxide powder having a water content in the range of 5 to 33 wt.%;
adding water to the low water content calcium hydroxide powder under stirring to give a high water content calcium hydroxide powder having a water content in the range of 35 to 55 wt.%;
rotating the high water content calcium hydroxide powder to bring the powder into contact with each other, whereby producing aggregated spherical water-containing calcium hydroxide; and
drying the aggregated water-containing calcium hydroxide.

# FIG. 1

1 (Semiconductor device manufacturing system)

2 (Exhaust pump)

3

3 1

3 6

3 2

3 3

3 4

3 5

5 (Exhaust pump)

# FIG. 2

Example 1

Example 2

Comparison Example 1

$F_2/Ca$ ratio

1.0
0.8
0.6
0.4
0.2
0

Center          Outer Shell

Position of measurement
(in diameter direction)

## INTERNATIONAL SEARCH REPORT

| International application No. |
|---|
| PCT/JP2007/061295 |

**A. CLASSIFICATION OF SUBJECT MATTER**
*C01F11/02*(2006.01)i, *B01D53/28*(2006.01)i, *B01D53/86*(2006.01)i, *B01J20/04*
(2006.01)i

According to International Patent Classification (IPC) or to both national classification and IPC

**B. FIELDS SEARCHED**

Minimum documentation searched (classification system followed by classification symbols)
C01F11/02, B01D53/28, B01D53/86, B01J20/04

Documentation searched other than minimum documentation to the extent that such documents are included in the fields searched
Jitsuyo Shinan Koho          1922-1996   Jitsuyo Shinan Toroku Koho    1996-2007
Kokai Jitsuyo Shinan Koho    1971-2007   Toroku Jitsuyo Shinan Koho    1994-2007

Electronic data base consulted during the international search (name of data base and, where practicable, search terms used)
CAplus(STN), WPI, Science Direct, JSTPlus(JDream2)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2005-350343 A   (Ube Material Industries,<br>Ltd.),<br>22 December, 2005 (22.12.05),<br>Claims; Par. Nos. [0016] to [0024]; examples<br>(Family: none) | 26-31<br>1-25 |
| X<br>A | JP 2002-29738 A   (Okutama Kogyo Co., Ltd.),<br>29 January, 2002 (29.01.02),<br>Claims; examples<br>(Family: none) | 26-29<br>1-25,30,31 |
| A | JP 2006-21945 A   (Yoshizawa Lime Industry Co.,<br>Ltd.),<br>26 January, 2006 (26.01.06),<br>(Family: none) | 1-25 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>21 August, 2007 (21.08.07) | Date of mailing of the international search report<br>04 September, 2007 (04.09.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2007/061295

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-354414 A (Okayama Kyodo Lime Co., Ltd.),<br>25 December, 2001 (25.12.01),<br>(Family: none) | 1-25 |
| A | JP 7-149580 A (Suzuki Kogyo Kabushiki Kaisha),<br>13 June, 1995 (13.06.95),<br>(Family: none) | 1-25 |
| A | JP 2002-516247 A (S.A. Lhoist Recherche et Developpement),<br>04 June, 2002 (04.06.02),<br>& WO 1999/061373 A1 | 26-31 |
| A | JP 2004-161536 A (Yoshizawa Lime Industry Co., Ltd.),<br>10 June, 2004 (10.06.04),<br>(Family: none) | 26-31 |
| A | JP 2005-104754 A (Kokan Mining Co., Ltd.),<br>21 April, 2005 (21.04.05),<br>(Family: none) | 26-31 |
| A | JP 4-74710 A (Ashidachi Lime Co., Ltd.),<br>10 March, 1992 (10.03.92),<br>(Family: none) | 26-31 |

Form PCT/ISA/210 (continuation of second sheet) (April 2005)

## INTERNATIONAL SEARCH REPORT

| International application No. |
| --- |
| PCT/JP2007/061295 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

The "special technical feature" of the inventions of claims 1-25 is a porous calcium oxide having a BET specific surface area of not less than 50 $m^2$/g and a total pore volume of pores having a diameter of 2-100 nm within the range of 0.40-0.70 mL/g.  Meanwhile, the "special technical feature" of the inventions of claims 26-31 is a porous calcium hydroxide having a BET specific surface area of not less than 20 $m^2$/g and a total pore volume of pores having a diameter of 2-100 nm within the range of 0.25-0.40 mL/g.
Since there is no technical relationship between these inventions involving one or more of the same or corresponding special technical features, these inventions are not considered  (continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

International application No.

PCT/JP2007/061295

Continuation of Box No.III of continuation of first sheet(2)

so linked as to form a single general inventive concept.

Form PCT/ISA/210 (extra sheet) (April 2005)

**EP 2 039 655 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005072852 A
- JP 2002224565 A
- JP 2006021945 A
- JP 7149580 A
- JP 2002516247 A
- JP 2005350343 A
- JP 2003300725 A